# EUROPÄISCHE PATENTSCHRIFT

(11) **EP 3 873 775 B1**
(45) Veröffentlichungstag und Bekanntmachung des Hinweises auf die Patenterteilung: **14.06.2023**
(21) Anmeldenummer: 19722831.5
(22) Anmeldetag: 30.04.2019
(51) Int. Cl.: B60N 2/30, B60N 2/06, B60N 2/005, B60N 2/07, B60N 2/08, B60N 2/36

(54) **VERSTELLEINRICHTUNG ZUM VERLAGERN EINES SITZES, KRAFTFAHRZEUG UND VERFAHREN ZUM VERLAGERN EINES SITZES**
ADJUSTING DEVICE FOR MOVING A SEAT, MOTOR VEHICLE AND METHOD FOR MOVING A SEAT
DISPOSITIF DE RÉGLAGE DESTINÉ À DÉPLACER UN SIÈGE, VÉHICULE AUTOMOBILE ET PROCÉDÉ DESTINÉ À DÉPLACER UN SIÈGE

(30) Priorität: 30.10.2018 DE 202018106201 U
(43) Veröffentlichungstag der Anmeldung: 08.09.2021
(73) Patentinhaber: API CZ s.r.o., 391 76 Slapy (CZ)
(72) Erfinder: BARTOS, Miroslav, 39176 Slapy u Tábora (CZ)
(74) Vertreter: Schmid, Nils T.F.
(86) Internationale Anmeldenummer: PCT/EP2019/061062
(87) Internationale Veröffentlichungsnummer: WO 2020/088804

(56) Entgegenhaltungen:
- EP-A2- 0 841 210
- EP-A2- 1 526 035
- EP-A2- 1 992 519
- WO-A1-2015/022257
- FR-A1- 3 024 680
- FR-A1- 3 062 608
- JP-A- H11 170 895
- US-A1- 2005 225 143
- US-A1- 2006 119 157

## Beschreibung

Die vorliegende Erfindung betrifft ein Kraftfahrzeug mit einer Verstelleinrichtung zum Verlagern eines Sitzes oder einer Sitzbank des Kraftfahrzeugs (KFZ) in Fahrzeuglängsrichtung, um einen rückseitigen Laderaum mit einem wannenartigen Laderaumboden zu vergrößern oder zu verkleinern, dessen seitliche Wannenränder in einen gemeinsamen Wannengrund münden, auf dem ein Rollstuhl in dem Laderaum verstaubar ist.

Normalerweise sind die Rücksitze bzw. die Rücksitzbänke von KFZ, wie Kompaktwagen oder Geländewagen, unverschieblich an dem Kraftfahrzeugboden befestigt. Insbesondere das Beladen des hinter dem Rücksitz bzw. der Rücksitzbank angeordneten Laderaums des Kraftfahrzeugs mit einem Rollstuhl ist daher bei den meisten Kraftfahrzeugen nicht möglich. Aus dem Stand der Technik sind bereits Systeme zum geringfügigen Verschieben und/oder Verschwenken der Rücksitze bzw. der Rücksitzbank bekannt, um zusätzlichen Laderaum für das Beladen mit einem Rollstuhl zu ermöglichen.

Beispielsweise offenbart WO 2016/066148 A1 eine Vorrichtung zum Verlagern der Rücksitzbank zwischen einer in Fahrtrichtung vorderen Position und einer in Fahrtrichtung hinteren Position. Die Vorrichtung umfasst zwei seitlich bezüglich der Kraftfahrzeugmitte positionierte und an dem Kraftfahrzeugboden befestigte Schwenkeinrichtungen sowie zwei etwa in der Fahrzeugmitte positionierte und an dem Fahrzeugboden befestigte weitere Schwenkeinrichtungen. Sämtliche Schwenkeinrichtungen sind im Wesentlichen ähnlich aufgebaut. Ein Befestigungsprofil ist an dem Kraftfahrzeugboden befestigt und ein Schwenkprofil ist schwenkbar an dem Befestigungsprofil gelagert, wobei das Schwenkprofil zwischen einer ersten Position, in der der Rücksitz in der vorderen Stellung angeordnet ist und einer zweiten Position, in der der Rücksitz in der hinteren Stellung angeordnet ist, verschwenkbar ist. Dazu weist das Befestigungsteil eine gekrümmte Führungsnut auf, in der ein an dem Rücksitz und an dem Schwenkteil befestigter Befestigungsstift kulissenartig entlanggleiten kann. Die beiden Enden der Führungsnut begrenzen dabei die Schwenkbewegung des Schwenkteils bezüglich des Befestigungsteils und damit die Verschiebebewegung des Rücksitzes. Das Schwenkteil umfasst ebenfalls eine Führungsnut, in der ein an dem Befestigungsteil montierter Haltestift geführt ist und um den sich das Schwenkteil relativ zu dem Befestigungsteil bewegen kann. Die beiden Führungsnuten an dem Befestigungsteil und an dem Schwenkteil besitzen jeweils ein hakenförmiges Rastende, in das der jeweilige Führungsstift einrasten kann, um den Sitz in der jeweiligen Position nach einem Verschiebevorgang zu fixieren. Um eine Verschiebung des Rücksitzes zu initiieren, weist eines der Schwenkteile der seitlichen Befestigungsteile einen Fußhebel auf, bei dessen Betätigung eine Rotation des Hebels samt Schwenkteil um den Haltestift relativ zu dem Befestigungsteil einhergeht. Insbesondere beim Verlagern des Sitzes in die vordere Position muss der jeweilige Benutzer entgegen der Gewichtskraft des Sitzes eine entsprechend hohe Kraft aufbringen, um den Stift aus dem jeweiligen Rasthakenende in der Führungsnut zu heben und anschließend entlang der gekrümmten Führungsnut zu verschieben, um den Sitz in die vordere Position zu bewegen.

An dieser Verstelleinrichtung hat sich als nachteilig erwiesen, dass zum einen die axiale Verschiebbarkeit durch die Abmessung der Kulissenführung, insbesondere der gekrümmten Führungsnut in dem Befestigungsteil, limitiert ist. Insofern können lediglich begrenzte Verschiebungen des Sitzes in Fahrzeuglängsrichtung vollzogen werden, ohne die Abmessung Kulissenführung übermäßig lang zu gestalten, wozu bei bestehenden Automobilen kein Bauraum verfügbar ist. Außerdem kann die Verstelleinrichtung nur zwischen zwei Endpositionen hin und her bewegt werden. Eine stufenweise Verlagerung des Sitzes ist damit nicht möglich. Des Weiteren ist die Betätigung der Verstelleinrichtung zu optimieren. Zum einen ist der Fußhebel schwer erreichbar, da der jeweilige Benutzer in den Laderaum einsteigen muss, um den seitlichen Fußhebel erreichen zu können. Zum anderen ist dabei ein hoher Kraftaufwand nötig, um gegen die Gewichtskraft des Sitzes bzw. insbesondere der Rücksitzbank anzukommen.

US 2005/225143 A1 betrifft einen geteilten, abklappbaren Fahrzeugrücksitz und EP 1 992 519 A2 betrifft eine Sitzvorrichtung für ein Fahrzeug.

Eine Aufgabe der vorliegenden Erfindung besteht darin, die Nachteile aus dem Stand der Technik zu überwinden, insbesondere eine Verstelleinrichtung zum Verlagern eines Sitzes eines KFZ in Fahrzeuglängsrichtung bereitzustellen, mit der größere Verstellwege bei einfach zugänglicher und/oder kraftschonender Betätigung zu erreichen sind, insbesondere ohne den Bauraumbedarf zu erhöhen.

Die vorliegende Aufgabe wird durch den Gegenstand der unabhängigen Ansprüche 1 und 10 gelöst.

Die vorliegende Erfindung stellt ein Kraftfahrzeug mit einer Verstelleinrichtung zum Verlagern, insbesondere Verschieben, eines Sitzes oder einer Sitzbank des Kraftfahrzeugs (KFZ) in Fahrzeuglängsrichtung bereit, um einen rückseitigen Laderaum zu vergrößern oder zu verkleinern. Beispielsweise handelt es sich bei dem Sitz um einen Rücksitz bzw. bei der Sitzbank um eine Rücksitzbank. Wenn in dieser Beschreibung von Fahrzeuglängsrichtung gesprochen wird, ist damit im Allgemeinen die Erstreckungsrichtung zwischen Fahrzeugheck, die entgegen der Fahrtrichtung nach hinten weist, und der Fahrzeugfront, die in Fahrtrichtung nach vorne weist, gemeint. Ausdrücke wie "rückseitige" oder "hintere" bedeuten damit im Wesentlichen, dass das jeweilige Bauteil in Richtung des Fahrzeughecks, bzw. fahrzeugheckseitig, orientiert ist. Ausdrücke wie "vorderseitige" oder "vordere" bedeuten im Wesentlichen, dass das jeweilige Bauteil in Richtung der Fahrzeugfront, bzw. fahrzeugfrontseitig, orientiert ist. Insbesondere kommt die erfindungsgemäße Verstelleinrichtung bei Kraftfahrzeugen zum Einsatz, mit denen Rollstuhlfahrer transportiert werden können, insbesondere bei denen ein Rollstuhl und/oder ein Rollstuhl samt Insasse vorzugsweise mittels einer Rampe in den Laderaum einfahren bzw. eingeschoben werden kann, um dort während der Fahrt verstaut und vorzugsweise gesichert werden zu können. Beispielsweise kann ein derartiger Laderaum einen im Wesentlichen wannenartigen Laderaumboden aufweisen, der seitliche, insbesondere sich in Fahrzeuglängsrichtung erstreckende, Wannenränder aufweist und einen gemeinsamen Wannengrund, der vorzugsweise bezüglich der Wannenränder nach unten, das heißt in Vertikalrichtung, herabgesetzt ist und in den die Wannenränder münden. Vorzugsweise kann ein Rollstuhl in dem Laderaum auf dem Wannengrund während der Fahrt verstaubar sein und/oder der Laderaum mittels einer Rampe von außen durch den Rollstuhl befahrbar sein.

Die Verstelleinrichtung umfasst eine vordere an den Sitz zu befestigende Stütze, die schwenkbeweglich an dem Laderaumboden oder einem an den Laderaumboden, insbesondere in Fahrzeuglängsrichtung, anschließenden Fahrgastraumboden zu lagern ist. Es sei klar, dass eine Sitzbank mehrere Sitzstützen aufweisen kann, wobei insbesondere die Anzahl der Stützen der Anzahl der Sitze pro Sitzbank entspricht. Die Befestigung zwischen Stütze und Sitz kann beliebig ausgeführt sein, beispielsweise mittels einer kulissenartigen Führung, um die Verlagerung des Sitzes in Fahrzeuglängsrichtung zu erlauben. Die schwenkbewegliche Lagerung der Stütze an dem Laderaum- oder Fahrgastraumboden, was beispielsweise ein Schwenklager sein kann, legt eine Anbindungsstelle der Stütze an den entsprechenden Boden fest. Beispielsweise ist das Schwenklager derart ausgeführt, dass eine Verlagerung der Stütze in Fahrzeuglängsrichtung und/oder quer zur Fahrzeuglängsrichtung relativ zu dem Schwenklager bzw. dem entsprechenden Boden unterbunden ist, während ein Schwenken um die schwenkbeweglich Lagerung gewährleistet ist.

Ferner umfasst die Verstelleinrichtung eine an einen Wannenrand zu befestigende Führungsschiene. Die Führungsschiene kann sich im Wesentlichen in Fahrzeuglängsrichtung erstrecken, wobei eine Querschnittsabmessung der Führungsschiene deutlich kleiner bemessen ist, als eine Längserstreckungsabmessung. Die Führungsschiene kann außerdem einen im Wesentlichen rechteckigen, vorzugsweise quadratischen, Querschnitt besitzen, wobei auch andere Querschnittformen möglich sind. Beispielsweise ist es möglich, dass eine Außenfläche der Führungsschiene komplementär zu einer Wannenseite geformt ist, welche den Wannenrand mit dem Wannengrund verbindet. Des Weiteren kann eine zusätzliche Montagehilfe, wie beispielsweise ein Winkel, eingesetzt werden, um die Befestigung der Führungsschiene an dem Wannenrand zu realisieren. Die Führungsschiene ist dabei im Wesentlichen in Fahrzeuglängsrichtung orientiert, vorzugsweise überwiegend oder vollständig horizontal orientiert. Beispielsweise ist eine Erstreckungsrichtung der Führungsschiene parallel zu der Fahrzeuglängsrichtung orientiert.

Ferner umfasst die Verstelleinrichtung einen hinteren, sitzseitigen Schlitten, der mit der Führungsschiene in einen Gleiteingriff verbringbar ist, vorzugsweise im Gleiteingriff steht. Beispielsweise kann der Sitz an dem Schlitten befestigt sein. Dazu kann der Sitz wenigstens eine, vorzugsweise genau zwei, Tragstützen besitzen, die vorzugsweise fest an dem Schlitten montiert sind. Die beiden hinteren Tragstützen können bezüglich der Fahrzeuglängsrichtung im Wesentlichen auf gleicher Höhe angeordnet und/oder auf dem Schlitten befestigt sein. Gemäß einem Aspekt der vorliegenden Erfindung ist der Schlitten derart mit der Führungsschiene im Gleiteingriff, dass der Schlitten überwiegend, vorzugsweise vollständig, geradlinig relativ zu der Führungsschiene in Fahrzeuglängsrichtung verlagerbar ist. Durch das Verlagern des Sitzes in Fahrzeuglängsrichtung kann der rückseitige Laderaum vergrößert bzw. verkleinert werden. Ferner schwenkt die Stütze beim Verlagern des Schlittens relativ zu der Führungsschiene um die schwenkbewegliche Lagerung. Die erfindungsgemäße Verstelleinrichtung kann daher die Schwenkbewegung der vorderen Sitzstütze mit einer translatorischen, geradlinigen Relativbewegung des Sitzes bzw. des Schlittens bezüglich der Führungsschiene vollziehen. Dadurch, dass sich der Schlitten, auf dem der entsprechende Sitz befestigt ist, überwiegend, insbesondere vollständig, geradlinig in Fahrzeuglängsrichtung in Richtung Fahrzeugfront oder in Richtung Fahrzeugheck verlagern lässt, sind beim Verlagern des Sitzes keine Gewichtskräfte des Sitzes und/oder des Schlittens zu überwinden, um eine Verlagerung des Sitzes zu initiieren. Ein Benutzer muss lediglich die zwischen Führungsschiene und Schlitten bestehenden Gleitreibungskräfte überwinden, um den Sitz zu verlagern. Dabei können geeignete Maßnahmen, wie Schmierung und/oder reibungsarme Lagerungsmittel, Einsatz finden, um die entsprechende Gleitreibung zu reduzieren. Der Schlitten kann beispielsweise als ebene, dünnwandige Platte, vorzugsweise aus Metall, wie Alu, hergestellt sein.

In einer beispielhaften Ausführung der erfindungsgemäßen Verstelleinrichtung ist der Gleiteingriff mittels einer Linearführung, insbesondere Schienenführung, realisiert und/oder eine Verlagerungsrichtung des Schlittens relativ zu der Führungsschiene im Wesentlichen horizontal orientiert. Unter einer Linearführung kann beispielsweise verstanden werden, dass der Schlitten relativ zu der Führungsschiene auf einer Geraden bewegt werden kann, wobei beispielsweise Schlitten und Führungsschiene direkt, vorzugsweise ausschließlich getrennt durch Schmierstoff oder Wälzkörper, linear beweglich zusammengefügt sind. Beispielsweise kann die Linearführung auch als Schienenführung ausgebildet sein, bei der die Führungsschiene als Profilschiene ausgebildet sein kann, was üblicherweise als Profilschienenführung bezeichnet wird, bei der wenigstens eine, zwei oder jeweils drei einander zugeordnete Führungsflächen der Führungsschiene und des Schlittens relativ zueinander vorzugsweise gleitend linear geführt werden.

Gemäß einer weiteren beispielhaften Ausführung der erfindungsgemäßen Verstelleinrichtung weist die Führungsschiene eine sich linear in Fahrzeuglängsrichtung erstreckende Nut und/oder Eingriffsöffnung auf. Die Nut kann dabei im Wesentlichen parallel zur Längserstreckung der Führungsschiene orientiert und/oder parallel zur Fahrzeuglängsrichtung und/oder horizontal angeordnet sein. Gemäß einer Weiterbildung der vorliegenden Erfindung kann der Schlitten wenigstens eine der Nut zugeordnete Kufe aufweisen, welche in der Nut in Fahrzeuglängsrichtung translatorisch, überwiegend geradlinig, vorzugweise vollständig geradlinig, verlagerbar ist. Vorzugsweise besteht aufgrund des Eingreifens der wenigstens einen Kufe in die Führungsschienennut eine geführte Verlagerungsmöglichkeit des Sitzes in Fahrzeuglängsrichtung, vorzugsweise bei der ein Verkanten des Schlittens bzw. der Kufe bezüglich der Führungsschiene bzw. der Führungsschienennut vermieden ist.

In einer Weiterbildung der erfindungsgemäßen Verstelleinrichtung ist die Nut an wenigstens einem Ende in Fahrzeuglängsrichtung, vorzugsweise an dem fahrzeugheckseitigen Ende und/oder an dem fahrzeugfrontseitigen Ende, offen gestaltet. Dies bedeutet, dass ein Zugriff bzw. Eingriff in die Nut in Fahrzeuglängsrichtung von der Fahrzeugfront bzw. dem Fahrzeugheck her ermöglicht ist. Beispielsweise ist die Nut derart, vorzugsweise offen, gestaltet, dass der Schlitten an dem wenigstens einen Ende in Fahrzeuglängsrichtung an der Führungsschiene angebracht werden kann, vorzugsweise die wenigstens eine Kufe in die Nut in Fahrzeuglängsrichtung eingeschoben werden kann. Dies gewährleistet eine Modularität der erfindungsgemäßen Verstelleinrichtung. Beispielsweise kann im Falle einer Wartung an dem Schlitten bzw. dem Sitz lediglich der Schlitten aus dem Gleiteingriff mit der Führungsschiene gelöst werden, ohne die Führungsschiene ebenfalls zu demontieren, um Wartungsmaßnahmen an dem Schlitten, der Führungsschiene und/oder dem Sitz vorzunehmen.

In einer beispielhaften Ausführung der erfindungsgemäßen Verstelleinrichtung sind die wenigstens eine Kufe und die Nut aufeinander formabgestimmt, insbesondere komplementär zueinander geformt. Dadurch lässt sich insbesondere eine ergonomisch gute Führung bzw. Verlagerung des Schlittens relativ zu der Führungsschiene erzielen und/oder ein Wackeln bzw. Nackeln der wenigstens einen Kufe in der Führungsschienennut vermeiden. Beispielsweise können die wenigstens eine Kufe und die Nut derart aufeinander formabgestimmt sein, dass ein Verlagern der Kufe innerhalb der Führungsschienennut quer zur Fahrzeuglängsrichtung und/oder quer zur überwiegenden, vorzugsweise vollständigen, geradlinigen Verlagerungsrichtung des Schlittens unterbunden ist.

Gemäß einer beispielhaften Weiterbildung der Verstelleinrichtung ist die Linearführung als Schwalbenschwanzführung realisiert. Dadurch kann eine formschlüssige Verbindung zwischen Kufe und Nut erreicht werden. Insofern kann die Linear-Schwalbenschwanzführung neben der Funktion, den Schlitten relativ zu der Führungsschiene zu verlagern, auch eine Sicherungs- bzw. Befestigungsfunktion des Schlittens an der Führungsschiene übernehmen. Beispielsweise besitzt die Nut einen im Wesentlichen T-förmigen Querschnitt und/oder die wenigstens eine Kufe einen im Wesentlichen T-förmigen Querschnitt. Allerdings sind auch weitere Querschnittsformen denkbar. Beispielsweise kann die Nut derart geformt sein, dass sie eine Hinterschneidung bildet, vorzugsweise um in dem Gleiteingriff mit der Kufe des Schlittens ein Entfernen der Kufe aus der Nut in einer Richtung quer zur Fahrzeuglängsrichtung zu verhindern.

In der erfindungsgemäßen Verstelleinrichtung erstreckt sich der Schlitten im Wesentlichen über die gesamte Sitzbreite, insbesondere Sitzbankbreite, und brückenartig über den Laderaumboden, vorzugsweise über den Wannengrund. Eine Abmessung des Schlittens quer zur Fahrzeuglängsrichtung kann beispielsweise in Abhängigkeit einer Sitzbreite oder einer Sitzbankbreite und/oder in Abhängigkeit einer Abmessung des Laderaumbodens, vorzugsweise des Wannengrunds, dimensioniert sein. Insbesondere aufgrund der brückenartigen Anordnung des Schlittens ist verfügbarer Stauraum zwischen Wannengrund und Schlitten in dem Laderaum geschaffen. Gemäß einer Weiterbildung können zwei, vorzugsweise formgleiche, Führungsschienen parallel zueinander orientiert und etwa auf gleicher Höhe bezüglich der Fahrzeuglängsrichtung angeordnet und jeweils an einem Wannenrand angebracht sein. Insbesondere sind die beiden Führungsschienen an sich gegenüberliegenden Wannenrändern befestigt und/oder wenigstens eine Kufe je einer Führungsschiene zugeordnet. Insofern kann der Schlitten an beiden Fahrzeugseiten an den jeweiligen Wannenrändern mit der jeweils dort befestigten Führungsschiene im Gleiteingriff stehen, insbesondere derart, dass eine gleichmäßige Gewichtsverteilung, insbesondere Gewichtsaufnahme, zwischen den bzw. durch die beiden gegenüberliegenden Führungsschienen besteht. Gemäß einer beispielhaften Ausführung der erfindungsgemäßen Verstelleinrichtung ist die Führungsschiene derart an dem Wannenrand, vorzugsweise an einer in Richtung des gegenüberliegenden Wannenrands orientierten Wannenseite, zu befestigen, dass die Nut dem gegenüberliegenden Wannenrand, vorzugsweise der gegenüberliegenden Wannenseite, insbesondere der Nut der gegenüberliegenden weiteren Führungsschiene, zugewandt ist. Die Anbringung der Führungsschiene bzw. der Führungsschienen in dem Wanneninneren kann sich insofern vorteilhaft auswirken, als Vertikalbauraum durch die Verstelleinrichtung eingespart ist, wodurch insbesondere mehr Platz in Vertikalrichtung für einen auf dem entsprechenden Sitz sitzenden Fahrgast zur Verfügung steht. Ein weiterer Vorteil der Orientierung der offenen Nut in Richtung Wanneninneres, also in Horizontalrichtung, besteht darin, dass die Nut für Schmutz und/oder lose Teile schwerer zugänglich ist, welche ein Blockieren der Führungsschienennut zur Folge haben können. Des Weiteren kann die Führungsschiene derart an dem Wannenrand orientiert sein, dass eine die Nut begrenzende, sich von einer Nutaußenseite hin zu einem Nutgrund erstreckende Nutwand den Schlitten, insbesondere die wenigstens eine Kufe, trägt. Dadurch kann der beim Verlagern des Sitzes zu überwindende Gleitreibungswiderstand gering gehalten werden, insbesondere auf die zwischen der Nutwand und der Kufe bestehende Gleitreibung reduziert werden.

In einer beispielhaften Ausführung der erfindungsgemäßen Verstelleinrichtung ist der Schlitten in Fahrzeuglängsrichtung um mehr als 100 mm, insbesondere um mehr als 110 mm, 120 mm, 130 mm, 140 mm, 150 mm, 160 mm, 170 mm, 180 mm, 190 mm, 200 mm oder um mehr als 200 mm, relativ zu der Führungsschiene verlagerbar. Die erfindungsgemäße Verstelleinrichtung ermöglicht auf konstruktiv einfache Weise große Verstellweiten bzw. -wege in Fahrzeuglängsrichtung. Insbesondere kann eine Nutlänge der Führungsschiene in Fahrzeuglängsrichtung mehr als 100 mm, insbesondere mehr als 110 mm, 120 mm, 130 mm, 140 mm, 150 mm, 160 mm, 170 mm, 180 mm, 190 mm, 200 mm oder mehr als 200 mm, betragen.

Die erfindungsgemäße Verstelleinrichtung kann außerdem derart ausgebildet sein, dass ein schrittweises, stufenweises Verlagern des Sitzes in Fahrzeuglängsrichtung ermöglicht ist. Dazu können Führungsschiene und Schlitten in diskreten und/oder vordefinierten Abständen zueinander angeordnete Rastelemente aufweisen, die beim jeweiligen Rasteingriff miteinander eine Sitzposition entlang der Fahrzeuglängsrichtung festlegen.

Gemäß einem weiteren Aspekt der vorliegenden Erfindung, der mit dem vorhergehenden Aspekt und den beispielhaften Weiterbildungen kombinierbar ist, ist eine Verstelleinrichtung zum Verlagern, insbesondere Verschieben, eines Sitzes oder einer Sitzbank eines Kraftfahrzeugs (KFZ) in Fahrzeuglängsrichtung bereitgestellt, um einen rückseitigen Laderaum zu vergrößern oder zu verkleinern. Beispielsweise handelt es sich bei dem Sitz um einen Rücksitz bzw. bei der Sitzbank um eine Rücksitzbank. Wenn in dieser Beschreibung von Fahrzeuglängsrichtung gesprochen wird, ist damit im Allgemeinen die Erstreckungsrichtung zwischen Fahrzeugheck, die entgegen der Fahrtrichtung nach hinten weist, und der Fahrzeugfront, die in Fahrtrichtung nach vorne weist, gemeint. Ausdrücke wie "rückseitige" oder "hintere" bedeuten damit im Wesentlichen, dass das jeweilige Bauteil in Richtung des Fahrzeughecks, bzw. fahrzeugheckseitig, orientiert ist. Ausdrücke wie "vorderseitige" oder "vordere" bedeuten im Wesentlichen, dass das jeweilige Bauteil in Richtung der Fahrzeugfront, bzw. fahrzeugfrontseitig, orientiert ist. Insbesondere kommt die erfindungsgemäße Verstelleinrichtung bei Kraftfahrzeugen zum Einsatz, mit denen Rollstuhlfahrer transportiert werden können, insbesondere bei denen ein Rollstuhl und/oder ein Rollstuhl samt Insasse vorzugsweise mittels einer Rampe in den Laderaum einfahren bzw. eingeschoben werden kann, um dort während der Fahrt verstaut und vorzugsweise gesichert werden zu können. Beispielsweise kann ein derartiger Laderaum einen im Wesentlichen wannenartigen Laderaumboden aufweisen, der seitliche, insbesondere sich in Fahrzeuglängsrichtung erstreckende, Wannenränder aufweist und einen gemeinsamen Wannengrund, der vorzugsweise bezüglich der Wannenränder nach unten, das heißt in Vertikalrichtung, herabgesetzt ist und in den die Wannenränder münden. Vorzugsweise kann ein Rollstuhl in dem Laderaum auf dem Wannengrund während der Fahrt verstaubar sein und/oder der Laderaum mittels einer Rampe von außen durch den Rollstuhl befahrbar sein.

Die Verstelleinrichtung umfasst eine vordere an den Sitz zu befestigende Stütze, die schwenkbeweglich an dem Laderaumboden oder einem an den Laderaumboden, insbesondere in Fahrzeuglängsrichtung, anschließenden Fahrgastraumboden zu lagern ist. Es sei klar, dass eine Sitzbank mehrere Sitzstützen aufweisen kann, wobei insbesondere die Anzahl der Stützen der Anzahl der Sitze pro Sitzbank entspricht. Die Befestigung zwischen Stütze und Sitz kann beliebig ausgeführt sein, beispielsweise mittels einer kulissenartigen Führung, um die Verlagerung des Sitzes in Fahrzeuglängsrichtung zu erlauben. Die schwenkbewegliche Lagerung der Stütze an dem Laderaum- oder Fahrgastraumboden, was beispielsweise ein Schwenklager sein kann, legt eine Anbindungsstelle der Stütze an den entsprechenden Boden fest. Beispielsweise ist das Schwenklager derart ausgeführt, dass eine Verlagerung der Stütze in Fahrzeuglängsrichtung und/oder quer zur Fahrzeuglängsrichtung relativ zu dem Schwenklager bzw. dem entsprechenden Boden unterbunden ist, während ein Schwenken um die schwenkbeweglich Lagerung gewährleistet ist.

Ferner umfasst die Verstelleinrichtung eine an einen Wannenrand zu befestigende Führungsschiene. Die Führungsschiene kann sich im Wesentlichen in Fahrzeuglängsrichtung erstrecken, wobei eine Querschnittsabmessung der Führungsschiene deutlich kleiner bemessen ist, als eine Längserstreckungsabmessung.

Die Führungsschiene kann außerdem einen im Wesentlichen rechteckigen, vorzugsweise quadratischen, Querschnitt besitzen, wobei auch andere Querschnittformen möglich sind. Beispielsweise ist es möglich, dass eine Außenfläche der Führungsschiene komplementär zu einer Wannenseite geformt ist, welche den Wannenrand mit dem Wannengrund verbindet. Des Weiteren kann eine zusätzliche Montagehilfe, wie beispielsweise ein Winkel, eingesetzt werden, um die Befestigung der Führungsschiene an dem Wannenrand zu realisieren. Die Führungsschiene ist dabei im Wesentlichen in Fahrzeuglängsrichtung orientiert, vorzugsweise überwiegend oder vollständig horizontal orientiert. Beispielsweise ist eine Erstreckungsrichtung der Führungsschiene parallel zu der Fahrzeuglängsrichtung orientiert.

Ferner umfasst die Verstelleinrichtung einen hinteren, sitzseitigen Schlitten, der mit der Führungsschiene in einen Gleiteingriff verbringbar ist, vorzugsweise im Gleiteingriff steht. Beispielsweise kann der Sitz an dem Schlitten befestigt sein. Dazu kann der Sitz wenigstens eine, vorzugsweise genau zwei, Tragstützen besitzen, die vorzugsweise fest an dem Schlitten montiert sind. Die beiden hinteren Tragstützen können bezüglich der Fahrzeuglängsrichtung im Wesentlichen auf gleicher Höhe angeordnet und/oder auf dem Schlitten befestigt sein.

Gemäß dem weiteren Aspekt der vorliegenden Erfindung umfasst die Verstelleinrichtung eine insbesondere manuell zu betätigende, vorzugsweise motorbetriebene, wie elektromotobetriebene, Feststell- und Freigabeeinrichtung. Die Feststell- und Freigabeeinrichtung ist zwischen einem Sperrzustand, in dem der Schlitten entgegen einer Verlagerung an der Führungsschiene befestigt, insbesondere fixiert, ist, und einem Freigabezustand verbringbar, in dem der Schlitten relativ zu der Schiene verlagerbar ist. Die Feststell- und Freigabeeinrichtung kann dem Schlitten und/oder der Führungsschiene derart zugeordnet sein, dass der Sperrzustand bzw. der Freigabezustand einnehmbar ist. Durch Betätigung der Feststell- und Freigabeeinrichtung kann ein Fahrgast und/oder ein Rollstuhlfahrer, der in dem Laderaum untergebracht ist, die Feststell- und Freigabeeinrichtung in den Sperrzustand und in den Freigabezustand verbringen, um ein Verlagern der Sitzes zu ermöglichen und zu verhindern. Eine Betätigungsrichtung zum Feststellen und Freigeben der Feststell- und Freigabeeinrichtung kann koaxial zu einer Verlagerungsrichtung des Schlittens relativ zu der Führungsschiene orientiert sein. Als Betätigungsrichtung kann beispielsweise die Richtung aufgefasst werden, in welcher der jeweilige Benutzer die Feststell- und Freigabeeinrichtung betätigt, um zwischen den beiden Zuständen zu wechseln. Beispielsweise entspricht die Betätigungsrichtung derjenigen Richtung, in welcher der entsprechende Benutzer Kraft aufwenden muss, um zwischen den Zuständen der Feststell- und Freigabeeinrichtung zu wechseln. Dadurch ist ein konstruktiv einfach zugängliches und kraftschonendes Betätigen der Feststelleinrichtung gewährleistet. Ein Benutzer der erfindungsgemäßen Feststelleinrichtung muss zum Wechseln zwischen den Zuständen der Freigabe- und Feststelleinrichtung sowie zum Verlagern des Sitzes in Fahrzeuglängsrichtung nur in einer einzigen Ebene arbeiten, insbesondere Kraft aufbringen. Beispielsweise kann zum Freigeben der Feststell- und Freigabeeinrichtung, also zum Verbringen der Feststell- und Freigabeeinrichtung aus dem Sperrzustand in den Freigabezustand, die Betätigungsrichtung in Richtung des Fahrzeughecks zeigen. Des Weiteren kann beispielsweise zum Feststellen, wie Sperren, der Feststell- und Freigabeeinrichtung, also zum Verbringen der Feststell- und Freigabeeinrichtung von dem Freigabezustand in den Sperrzustand, die Betätigungsrichtung in Richtung der Fahrzeugfront zeigen.

In einer beispielhaften Ausführung der erfindungsgemäßen Feststelleinrichtung ist das Feststellen und Freigeben der Feststell- und Freigabeeinrichtung kinematisch von dem Verlagern des Schlittens relativ zu der Führungsschiene entkoppelt. Insbesondere ist die Feststell- und Freigabeeinrichtung kinematisch unabhängig von der Verlagerung des Schlittens relativ zu der Führungsschiene. Beispielsweise geht in Folge einer Betätigung der Feststell- und Freigabeeinrichtung, um diese zwischen den Zuständen zu verbringen, keine Verlagerung des Schlittens relativ zu der Führungsschiene einher. Die Feststell- und Freigabeeinrichtung kann auch strukturell von der Führungsschiene getrennt sein. Insbesondere sind die Feststell- und Freigabeeinrichtung und die Führungsschiene nicht aus einem Stück hergestellt und/oder nicht aneinander befestigt.

In einer beispielhaften Ausführung der Erfindung weist die Führungsschiene wenigstens zwei Rastelemente, wie eine Rastvertiefung, vorzugsweise Rastöffnung, oder einen Rastvorsprung, auf. Die Feststell- und Freigabeeinrichtung kann wenigstens ein den Führungsschienenrastelementen zugeordnetes Rastelement, wie einen Rastvorsprung oder eine Rastvertiefung, vorzugsweise Rastöffnung, aufweisen, um den Sitz, vorzugsweise den Schlitten, an wenigstens zwei, vorzugsweise wenigstens drei, Positionen in Fahrzeuglängsrichtung zu fixieren. Beispielsweise ist das wenigstens eine Rastelement der Feststell- und Freigabeeinrichtung derart den Führungsschienenrastelementen zugeordnet, dass das wenigstens eine Rastelement mit den Führungsschienenrastelementen in Eingriff gelangen kann. Vorzugsweise legt ein Eingriff zwischen dem wenigstens einen Rastelement und den Führungsschienenrastelementen den Sperrzustand der Feststell- und Freigabeeinrichtung fest. Beispielsweise befindet sich die Feststell- und Freigabeeinrichtung in dem Freigabezustand, wenn das wenigstens eine Rastelement sich nicht in einem Eingriff mit einem der Führungsschienenrastelemente befindet.

Gemäß der erfindungsgemäßen Verstelleinrichtung weist die Feststell- und Freigabeeinrichtung einen Zugarm zum Betätigen der Feststell- und Freigabeeinrichtung auf, der rückseitig des Sitzes und/oder mittig bezüglich der Fahrzugbreite, insbesondere mittig in Bezug auf den Schlitten, angeordnet ist. Dadurch ist der Zugarm besonders einfach zugänglich und/oder die Betätigung der Feststell- und Freigabeeinrichtung auf einfache Weise ermöglicht. Beispielsweise ist beim Betätigen des Zugarms, insbesondere beim Ziehen an dem Zugarm in Fahrzeuglängsrichtung, vorzugsweise in Richtung des Fahrzeughecks, die Feststell- und Freigabeeinrichtung aus dem Sperrzustand in den Freigabezustand verbringbar. Vorzugsweise wird dies dadurch erreicht, dass das Rastelement der Feststell- und Freigabeeinrichtung aus einem Eingriff mit dem entsprechenden Führungsschienenrastelement gebracht ist. Gemäß der Erfindung ist die Feststell- und Freigabeeinrichtung im Wesentlichen vollständig, insbesondere bis auf wenigstens einen Teil des Zugarms, insbesondere welcher von einem Benutzer zum Betätigen zu ergreifen ist, unterhalb des Schlittens angeordnet und/oder an einer dem Laderaumboden zugewandten Schlittenunterseite befestigt. Dadurch ist zum einen eine möglichst laderaumsparende Anbringung und Anordnung der Feststell- und Freigabeeinrichtung gewährleistet. Zum anderen schützt der Schlitten die Feststell- und Frageeinrichtung, insbesondere dessen bewegliche Komponenten, vor äußeren Beschädigungen.

In einer beispielhaften weiteren Ausführung der erfindungsgemäßen Verstelleinrichtung ist das Rastelement der Feststell- und Freigabeeinrichtung derart vorgespannt, vorzugsweise federvorgespannt, dass das Rastelement bei Erreichen eines diesem zugeordneten Führungsschienenrastelements in einen Eingriff mit diesem gedrückt ist, um den Sitz in Fahrzeuglängsrichtung an der entsprechenden Position zu fixieren. Ein Vorteil besteht darin, dass zum Verbringen der Feststell- und Freigabeeinrichtung in den Sperrzustand und/oder zum Verbringen des Rastelements der Feststell- und Freigabeeinrichtung in einen Eingriffszustand mit einem Führungsschienenrastelement keine weitere Betätigung der Feststell- und Freigabeeinrichtung notwendig ist. Das Rastelement der Feststell- und Freigabeeinrichtung kann außerdem derart vorgespannt, vorzugsweise federvorgespannt, sein, dass zum Freigeben der Feststell- und Freigabeeinrichtung, das heißt zum Verbringen der Feststell- und Freigabeeinrichtung aus dem Sperrzustand, die Vorspannung, insbesondere Federvorspannung, des Rastelements zu überwinden ist. Beispielsweise kann eine Spiralfeder, wie eine Schraubenfeder, derart insbesondere an der Schlittenunterseite angebracht sein, dass eine Federkraft quer, vorzugsweise lotrecht, bezüglich der Fahrzeuglängsrichtung und/oder der Verlagerungsrichtung des Schlittens orientiert ist.

In einer beispielhaften Weiterbildung der erfindungsgemäßen Verstelleinrichtung weist die Feststell- und Freigabeeinrichtung ein mit dessen Rastelement, insbesondere kraftübertragungsgemäß gekoppeltes, Getriebe, wie einen Kniehebel, auf. Das Getriebe kann beispielsweise derart mit dem Rastelement und dem Zugarm gekoppelt sein, dass bei Betätigung der Feststell- und Freigabeeinrichtung, insbesondere des Zugarms, sich dessen Rastelement entgegen der Vorspannung bewegt, insbesondere um das Rastelement aus dem Eingriff mit dem Führungsschienenrastelement freizugeben und/oder die Feststell- und Freigabeeinrichtung aus dem Sperrzustand in den Freigabezustand zu verbringen. Das Getriebe ermöglicht insbesondere eine beliebige Anordnung von Zugarm und Rastelement, um die Betätigungskraft des Nutzers auf das Rastelement der Feststell- und Freigabeeinrichtung zu übertragen.

Gemäß einer Weiterbildung der erfindungsgemäßen Verstelleinrichtung weist das Getriebe zwei mit jeweils einem Rastelement gekoppelte Hebelarme auf, die vorzugsweise mittels einer Kulissenführung aneinander gekoppelt sind. Beispielsweise ist die Feststell- und Freigabeeinrichtung, insbesondere das Getriebe, symmetrisch aufgebaut, wobei insbesondere eine Symmetrieachse parallel, insbesondere koaxial, bezüglich der Betätigungsrichtung der Feststell- und Freigabeeinrichtung, insbesondere des Zugarms, orientiert ist.

In einer beispielhaften Ausführung der erfindungsgemäßen Verstelleinrichtung ist eine Bewegungsrichtung des Rastelements der Feststell- und Freigabeeinrichtung zum Freigeben und Feststellen quer, vorzugsweise lotrecht, bezüglich der Fahrzeuglängsrichtung und/oder der Verlagerungsrichtung des Schlittens orientiert. Insbesondere kann dadurch ein besonders effektives Begrenzen bzw. Sperren des Schlittens entgegen der Verlagerung an der Führungsschiene realisiert werden, was beispielsweise bei Unfällen, bei welchen erhöhte Kräfte auf die Verstelleinrichtung einwirken, auftreten.

Insbesondere handelt es sich um ein KFZ, mit dem Rollstuhlfahrer transportiert werden können, insbesondere bei dem ein Rollstuhl und/oder ein Rollstuhl samt Insasse vorzugsweise mittels einer fahrzeugheckseitig anzubringenden Rampe in den fahrzeugheckseitigen Laderaum einfahren bzw. eingeschoben werden kann, um dort während der Fahrt verstaut und vorzugsweise gesichert werden zu können.

Das KFZ umfasst einen Sitz oder eine Sitzbank, insbesondere einen Rücksitz oder eine Rücksitzbank sowie einen rückseitigen Laderaum mit einem im Wesentlichen wannenartigen Laderaumboden, der seitliche, insbesondere sich in Fahrzeuglängsrichtung erstreckende, Wannenränder aufweist und einen gemeinsamen Wannengrund, der vorzugsweise bezüglich der Wannenränder nach unten, das heißt in Vertikalrichtung, herabgesetzt ist und in den die Wannenränder münden. Vorzugsweise kann ein Rollstuhl in dem Laderaum auf dem Wannengrund während der Fahrt verstaubar sein und/oder der Laderaum mittels einer Rampe von außen durch den Rollstuhl befahrbar sein.

Des Weiteren umfasst das KFZ eine Verstelleinrichtung zum Verlagern des Sitzes oder der Sitzbank in Fahrzeuglängsrichtung, um den Laderaum zu vergrößern oder zu verkleinern. Die Verstelleinrichtung kann beispielsweise entsprechend einem der vorhergehenden Aspekte bzw. gemäß einer der vorher beschriebenen beispielhaften Ausführungen ausgebildet sein. Die Verstelleinrichtung weist eine an einem Wannenrand befestigte Führungsschiene und einen Schlitten auf, auf dem der Sitz befestigt ist und der relativ zu der Führungsschiene in Fahrzeuglängsrichtung verlagerbar ist.

Bevorzugte Ausführungen sind in den Unteransprüchen angegeben.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Figur 1: eine perspektivische Ansicht einer erfindungsgemäßen Verstelleinrichtung eines erfindungsgemäßen Kraftfahrzeugs, auf der eine Sitzbank befestigt ist;
- Figur 2: eine perspektivische Ansicht der Verstelleinrichtung nach Figur 1 ohne der Sitzbank;
- Figur 3: eine Seitenansicht eines Ausschnitts einer erfindungsgemäßen Verstelleinrichtung;
- Figur 4: eine perspektivische Ansicht eines Laderaumbodens eines erfindungsgemäßen Kraftfahrzeugs, an dem eine Führungsschiene einer erfindungsgemäßen Verstelleinrichtung angebracht ist;
- Figur 5: eine perspektivische Unteransicht eines Ausschnitts eines Schlittens einer erfindungsgemäßen Verstelleinrichtung;
- Figur 6: eine Unteransicht eines Schlittens einer erfindungsgemäßen Verstelleinrichtung in einem ersten Betriebszustand;
- Figur 7: eine Unteransicht eines Schlittens einer erfindungsgemäßen Verstelleinrichtung in einem weiteren Betriebszustand; und
- Figur 8: eine schematische Darstellung des Verlagerns eines Sitzes in Fahrzeuglängsrichtung anhand dreier Sitzpositionen.

In der folgenden Beschreibung beispielhafter Ausführungen ist eine erfindungsgemäße Verstelleinrichtung im Allgemeinen mit der Bezugsziffer 1 versehen. Die Verstelleinrichtung 1 ist dazu eingerichtet, einen Sitz 3 oder eine Sitzbank 5, insbesondere Rücksitzbank, eines Kraftfahrzeugs (nicht dargestellt) in Fahrzeuglängsrichtung L zu verlagern, um einen rückseitigen Laderaum zu vergrößern oder zu verkleinern.

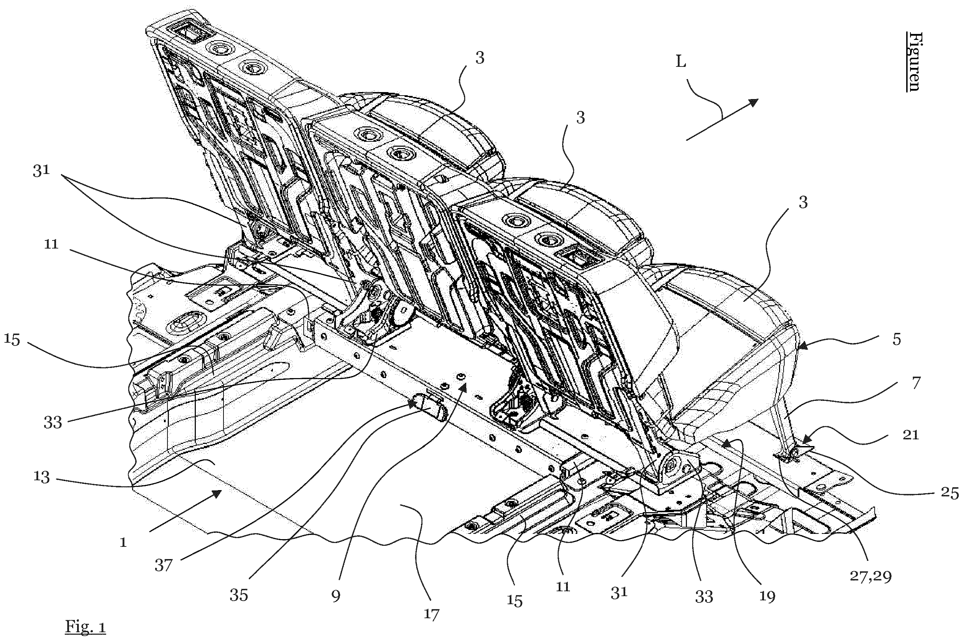

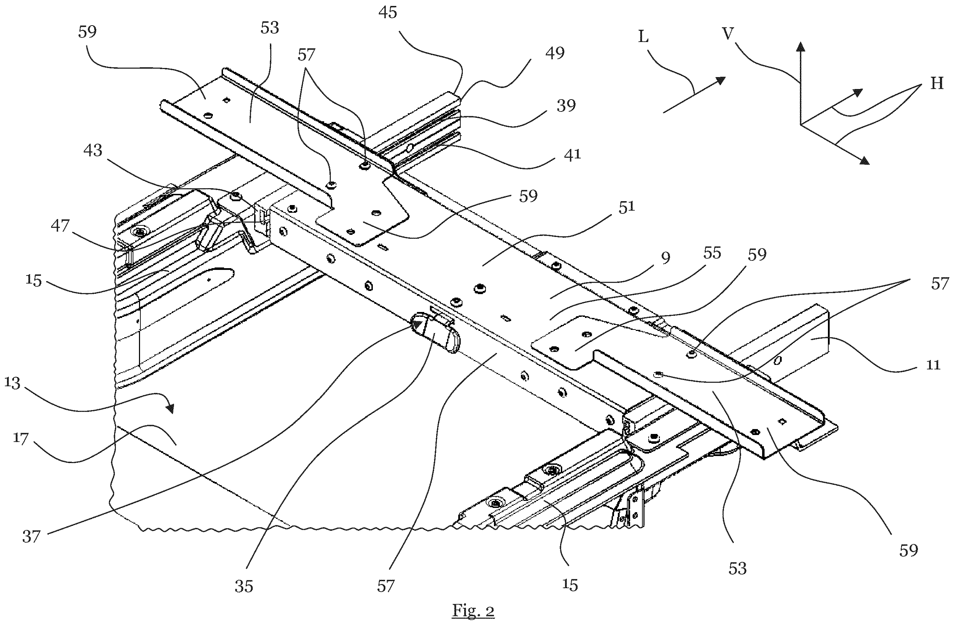

In Bezug auf Figur 1 wird hauptsächlich die Anordnung bzw. Anbringung der Verstelleinrichtung 1 in bzw. an dem Kraftfahrzeug sowie die Anbindung der Sitzbank 5 an das Kraftfahrzeug und die Verstelleinrichtung 1 erläutert. Bezugnehmend auf die Figuren 2 bis 8 wird auf die Funktionsweise der Verstelleinrichtung 1 und dessen Komponenten eingegangen.

In Figur 1 ist eine Sitzbank 5 bestehend aus drei nebeneinander angeordneten Sitzen 3 auf der Verstelleinrichtung 1 befestigt. Die Verstelleinrichtung 1 umfasst als Hauptkomponenten eine vordere Stütze 7, einen Schlitten 9 und eine Führungsschiene 11, wobei anhand der vorliegenden Figurenbeschreibung eine beispielhafte Ausführung der erfindungsgemäßen Verstelleinrichtung 1 mit zwei Führungsschienen 11 gezeigt ist. Ein erfindungsgemäßes Kraftfahrzeug (nicht dargestellt) umfasst neben der Sitzbank 5 einen rückseitigen Laderaum mit einem wannenartigen Laderaumboden 13, dessen seitliche Wannenränder 15 in einen gemeinsamen Wannengrund 17 münden, auf dem ein Rollstuhl (nicht dargestellt) in dem Laderaum verstaubar ist. Die vordere Stütze 7, die nur für einen der drei Stühle 3 der Sitzbank 5 ersichtlich ist, ist an einer jeweiligen Sitzunterseite befestigt, wobei die Befestigung nicht näher dargestellt ist. Die Stütze 7 ist an einem an den Laderaumboden 13 in Fahrzeuglängsrichtung L anschließenden Fahrgastraumboden 19 schwenkbeweglich mittels einer schwenkbeweglich Lagerung, wie ein Schwenklager 21, gelagert. Das Schwenklager 21 kann beispielsweise wie folgt aufgebaut sein. Ein im Wesentlichen U-förmiges Befestigungsprofil 23 ist beispielsweise durch eine Verschraubung an dem Fahrgastraumboden montiert. Die beiden die U-Form bildenden gegenüberliegenden Schenkel 25 besitzen eine Öffnung 27, durch die ein Befestigungsstift 29 sich vollständig hindurch erstreckt, welcher sich ebenfalls durch eine in der Stütze 7 vorgesehene Öffnung (nicht dargestellt) hindurch erstreckt, um die Stütze 7 an dem Befestigungsprofil 23 zu fixieren. Der Befestigungsstift 29 kann eine Rotationsachse definieren. Beispielsweise sind die Stütze 7 und das Befestigungsprofil 23 derart mit dem Befestigungsstift 29 gekoppelt, dass die Stütze 7 um die Rotationsachse des Befestigungsstifts 29 schwenken kann, wobei sich die Position des Schwenklagers 21 in Folge der Befestigung an dem Fahrgastraumboden nicht verändert. Rückseitig des Sitzes 3 ist jeder Sitz 3 mittels zwei Tragstützen 31 und mittels eines entsprechend des Schwenklagers 21 ausgebildeten Schwenklagers 33 an dem Schlitten 9 befestigt. Die beiden rückseitigen Tragstützen 31 sind im Wesentlichen in Bezug auf die Fahrzeuglängsrichtung L auf gleicher Höhe positioniert und an den seitlichen Randbereichen des jeweiligen Sitzes 3 angeordnet. Die Sitzbank 5 ist derart an dem Schlitten 9 befestigt, dass bei einer Verlagerung des Schlittens 9 relativ zu der Führungsschiene 11 in Fahrzeuglängsrichtung L die Sitzbank 5 der Verlagerung des Schlittens 9 folgt und die vorderseitige Stütze 7 relativ zu dem Schwenklager 21 verschwenkt wird.

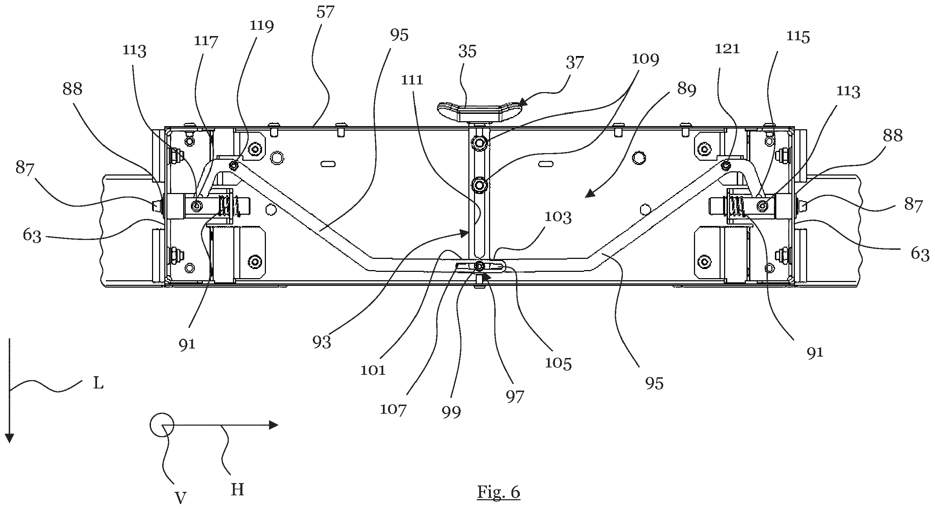

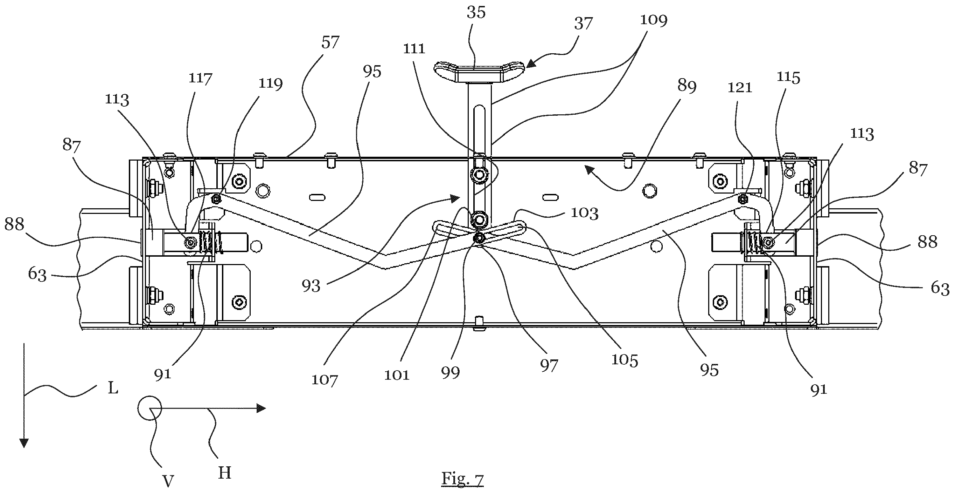

In Figur 1 ist bereits ein Zugarm 35 zum manuellen Betätigen einer Feststell- und Freigabeeinrichtung 37 angedeutet, die zwischen einem Sperrzustand, in dem der Schlitten 9 entgegen einer Verlagerung an der Führungsschiene 11 befestigt ist, und einem Freigabezustand verbringbar ist, in dem der Schlitten 9 relativ zu der Führungsschiene 11 in Fahrzeuglängsrichtung L verlagerbar ist. Auf die Funktionsweise der Feststell- und Freigabeeinrichtung 37 wird im Detail in Bezug auf die Figuren 6 und 7 eingegangen.

In Figur 2 ist die Verstelleinrichtung 1 zur besseren Erläuterung der Funktionsweise ohne die Sitzbank 5 abgebildet. Die Führungsschiene 11 besitzt eine sich in Fahrzeuglängsrichtung L im Wesentlichen über die gesamte Länge der Führungsschiene 11 erstreckende Nut 39. Mit der Nut 39 kann der Schlitten 9 in einem Gleiteingriff stehen, sodass der Schlitten 9 relativ zu der Führungsschiene 11 in Fahrzeuglängsrichtung L verschoben werden kann, um den rückseitigen Laderaum zu vergrößern bzw. zu verkleinern. In der beispielhaften Ausführung gemäß Figur 2 besitzt die Führungsschiene 11 eine weitere, im Wesentlichen parallel zu der Führungsnut 39 orientierte Führungsnut 41, mit welcher der Schlitten 9 ebenfalls im Gleiteingriff stehen kann. Die Führungsnut 41 kann beispielsweise dieselbe Geometrie wie die Führungsnut 39 besitzen. Die Nut 41 ist unterhalb der Nut 39 bezüglich der Vertikalrichtung V angeordnet und kann beispielsweise dazu vorgesehen sein, den Schlitten 9 samt Sitzbank 5 näher an dem Laderaumboden zu montieren, beispielsweise um in Vertikalrichtung V mehr Platz für Fahrgäste bereitzustellen. Die Führungsschiene 11 und die beiden Führungsnuten 39, 41 sind im Wesentlichen in Fahrzeuglängsrichtung L orientiert, die im Wesentlichen in Horizontalrichtung H liegt. Die Führungsnuten 39, 41 weisen in eine zur Fahrzeuglängsrichtung L lotrecht liegende Horizontalrichtung H und sind demnach der Führungsschiene 11 bzw. den Befestigungsnuten 39, 41 der gegenüberliegenden Führungsschiene 11 zugewandt. Die Nut 39 ist an beiden Enden in Fahrzeuglängsrichtung L der Führungsschiene 11, welche Enden durch jeweils eine Stirnseite 43, 45 gebildet sind, offen gestaltet. Der Schlitten 9 kann sowohl an der rückseitigen Stirnseite 43 als auch an der frontseitigen Stirnseite 45 in die Nut 39 eingeschoben werden, um den Gleiteingriff mit der Führungsschiene 11 zu realisieren und damit die Sitzbank 5 in dem Fahrzeuginnenraum zu positionieren. Die Nut 39 besitzt einen im Wesentlichen konstanten Querschnitt von einer an der rückseitigen Stirnwand 43 ausgebildeten Eingriffsöffnung 47 bis hin zu einer an der gegenüberliegenden, frontseitigen Stirnwand 45 ausgebildeten Eingriffsöffnung 49. Wie in Figur 2 zu erkennen ist, ragt die Führungsschiene 11 in Fahrzeuglängsrichtung L über den Wannenrand 15 vor. Dies ermöglicht es, große Verstellwege in Fahrzeuglängsrichtung L für die Sitzbank 5 durchzuführen.

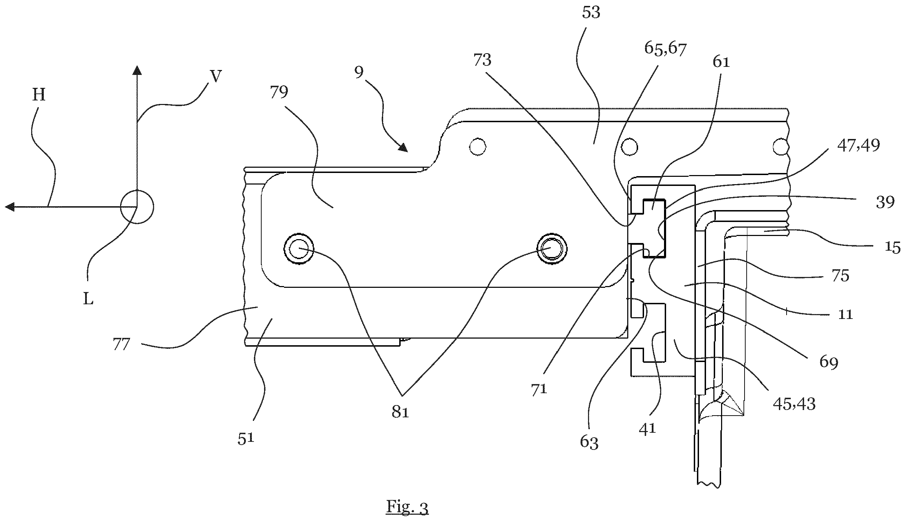

Gemäß der beispielhaften Ausführung in Figur 2 ist der Schlitten 9 mehrteilig aufgebaut und umfasst im Wesentlichen drei Hauptkomponenten: einen Brückenabschnitt 51 sowie zwei Verlängerungsabschnitte 53. Der Brückenabschnitt 51 erstreckt sich brückenartig und im Wesentlichen geradlinig über den Laderaumboden 13, insbesondere über den Wannengrund 17, das heißt in der zur Fahrzeuglängsrichtung L lotrecht orientierten Horizontalrichtung H, die die Fahrzeugbreite angibt. Der Brückenabschnitt 51 kann beispielsweise als im Wesentlichen L-förmiges oder U-förmiges Metallprofil, wie Blech, gefertigt sein, wobei ein Schenkel 55 im Wesentlichen in der durch die Fahrzeuglängsrichtung L und die zur Fahrzeuglängsrichtung L senkrecht orientierte Horizontalrichtung H gebildeten Horizontalebene liegt und ein Schenkel 57 sich rückseitig in Fahrzeuglängsrichtung L im Wesentlichen lotrecht von dem Schenkel 55 in Richtung des Wannengrunds 17 erstreckt. Der Brückenabschnitt 51 dient unter anderen auch zur Befestigung des Sitzes 3 bzw. der Sitzbank 5 an dem Schlitten 9. Zum anderen realisiert der Brückenabschnitt 51 den Gleiteingriff mit der Führungsschiene 11. Dies wird in Bezug auf die Figuren 3 bis 5 verdeutlicht. An einer in Vertikalrichtung V betrachteten Schlittenoberseite, bzw. Brückenabschnittsoberseite, sind an den gegenüberliegenden seitlichen Bereichen des Brückenabschnitts 51 die Verlängerungsabschnitte 53 montiert, wobei beispielsweise Verschraubungen 57 Anwendung finden können. In Fahrzeuglängsrichtung L sind die Verlängerungsabschnitte 53 schmaler bemessen als der Brückenabschnitt 51. Die Befestigung der Verlängerungsabschnitte 53 an dem Brückenabschnitt 51 ist derart realisiert, dass die Verlängerungsabschnitte 53 in Fahrzeuglängsrichtung L nicht bzw. nur geringfügig über den Brückenabschnitt 51 hervorragen und in der zur Fahrzeuglängsrichtung L lotrecht orientierten Horizontalrichtung H deutlich über den Brückenabschnitt 51 sowie über die Führungsschiene 11 und die seitlichen Wannenränder 15 hinwegragen. Die Verlängerungsabschnitte 53 dienen im Wesentlichen zur Befestigung und Aufnahme einer Sitzbank 5, das heißt wie in Bezug in Figur 1 dargestellt, einer Sitzbank 5 mit drei nebeneinander angeordneten Sitzen 3, wobei die beiden seitlichen Sitze 3 an den Verlängerungsabschnitten 53 befestigt werden. Ein Vorteil der erfindungsgemäßen Verstelleinrichtung 1 liegt auch darin, dass die originalgeräteherstellerbedingten (OEM) Sitze 3 bzw. Sitzbänke 5 unverändert genutzt werden können. Es sind demnach keine konstruktiven Änderungen an den Original-Sitzen 3 bzw. Original-Sitzbänken 5 der Automobilhersteller notwendig. Beispielsweise sind die Verlängerungsabschnitte 53 und der Brückenabschnitt 51 derart auf die Abmessungen der Sitze 3 bzw. Sitzbank 5 abgestimmt, dass die von den Original-Sitzen 3 bzw. Original-Sitzbänken 5 festgelegten Befestigungspositionen beibehalten werden können, welche mittels der Bezugsziffer 59 in Figur 2 angedeutet sind. Bei einer gewünschten Verlagerung des Sitzes 3 bzw. der Sitzbank 5 in Fahrzeuglängsrichtung L wird der Schlitten 9, also der Brückenabschnitt 51 und die daran befestigten Verlängerungsabschnitte 53, geradlinig entlang der Führungsschiene 11 in Fahrzeuglängsrichtung L bewegt.

In Figur 3 ist eine Seitenansicht auf den Schlitten 9 und die Führungsschiene 11 abgebildet, aus welcher der Gleiteingriff zwischen Führungsschiene 11 und Schlitten 9 hervorgeht. Der Schlitten 9 ist mittels einer vorzugsweise an dem Brückenabschnitt 51 befestigten Kufe 61, welche den Befestigungsnuten 39 und 41 zugeordnet ist, im Gleiteingriff mit der Führungsschiene 11. Gemäß der beispielhaften Ausführung in Figur 3 ist die Kufe 61 in Bezug auf die Führungsnut 39 formabgestimmt, insbesondere sind die Kufe 61 und die Führungsnut 39 komplementär zueinander geformt. Die Kufe 61 und die Führungsnut 39 sind zur Bildung einer Schwalbenschwanzführung geformt, wobei die Nut 39 und die Kufe 61 einen im Wesentlichen T-förmigen Querschnitt besitzen. Aufgrund der geometrischen Form und den damit einhergehenden Hinterschneidungen und der aufeinander abgestimmten Gestalt von Kufe 61 und Führungsschiene 39 ist ein Verlagern der Kufe 61 in einer Richtung quer zur Fahrzeuglängsrichtung L, insbesondere in Vertikalrichtung V oder in der zur Fahrzeuglängsrichtung L lotrecht orientierten Horizontalrichtung H, im Wesentlichen unterbunden. Die Kufe 61 ist an einer in Horizontalrichtung H weisenden Seitenfläche 63 angeordnet und zeigt damit in Richtung des Wannenrands 15, um mit der ebenfalls in Horizontalrichtung H orientieren offenen Nut 39 in Eingriff gelangen zu können. Die T-förmige Nut 39 bildet sich von einer Führungsschieneninnenfläche 65, welche eine Nutaußenseite 67 bildet, aus und erstreckt sich in das Innere der Führungsschiene 11 hin zu einem im Wesentlichen in Vertikalrichtung V orientierten Nutgrund 69. Die Nutaußenseite 67 ist mit dem Nutgrund 69 mittels einer abgestuften Nutwand 71, 73 zur Bildung der T-förmigen Nut 39 verbunden. In dem Gleiteingriff trägt die untere, laderaumbodenseitige Nutwand 71 im Wesentlichen vollständig die Gewichtskraft des Schlittens 9 in Folge des Gleiteingriffs zwischen Schiene 61 und Nut 39, wobei im Wesentlichen die Reibungskraft zwischen der unteren Nutwand 71 und der dieser zugeordneten Außenfläche der Kufe 61 besteht.

Die Führungsschiene 11 kann direkt, das heißt ohne weitere Komponenten, an dem Wannenrand 15 befestigt werden. In der beispielhaften Ausführung 3 ist zwischen Wannenrand 15 und Führungsschiene 11 ein im Wesentlichen L-förmiger Winkel 75 angeordnet, der beispielsweise zur Erhöhung der zwischen Wannenrand 15 und Führungsschiene 11 wirkenden Befestigungskraft dienen kann. Ferner ist in Figur 3 zu erkennen, dass der Verlängerungsabschnitt 53 eine flächig an einem dem rückseitigen Schenkel 57 gegenüberliegenden frontseitigen Schenkel 77 des Schlittens 9 mittels einer Lasche 79 anliegt, die beispielsweise das Montieren des Verlängerungsabschnitts 53 an dem Brückenabschnitt 51 erleichtert. Zur Befestigung können beispielsweise Verschraubungen 81 zwischen Lasche 79 und Schenkel 77 eingesetzt werden.

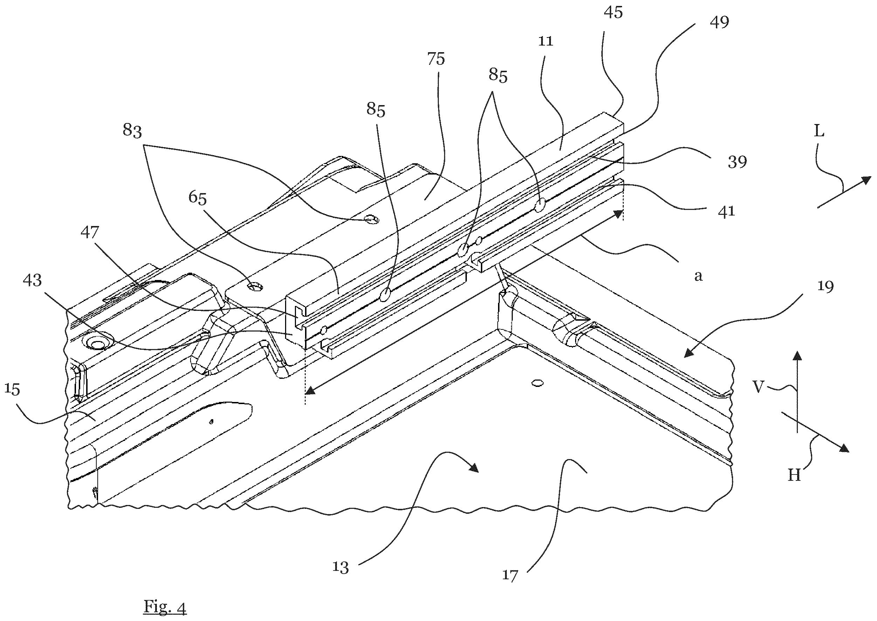

In Figur 4 ist eine Detailansicht einer Führungsschiene 11 einer erfindungsgemäßen Verstelleinrichtung 1 in perspektivischer Ansicht dargestellt, wobei der Schlitten 9 zur besseren Darstellung des der Führungsschiene 11 weggelassen ist. Es ist zu erkennen, dass der optionale Befestigungswinkel 75 an dem Wannenrand 15 mittels Öffnungen 83, die beispielsweise für eine Verschraubung (nicht dargestellt) dienen können, versehen ist. In Figur 4 ist ferner zu erkennen, dass der Laderaumboden 13 bezüglich des Fahrgastraumbodens 19 in Vertikalrichtung V versenkt bzw. herabgesetzt ist, insbesondere wodurch der wannenartige Laderaumboden 13 gebildet wird. Eine Längserstreckung a der Führungsschiene 11 beträgt in Fahrzeuglängsrichtung L mehr als 100 mm, insbesondere mehr als 110 mm, 120 mm, 130 mm, 140 mm, 150 mm, 160 mm, 170 mm, 180 mm, 190 mm, 200 mm, wodurch die großen Verstellwege in Fahrzeuglängsrichtung L ermöglicht sind, um eine möglichst effektive Vergrößerung des Laderaums auf konstruktiv einfache Weise zu erreichen. Wie in Figur 4 zu erkennen ist, erstreckt sich die Nut 39 ebenfalls über die gesamte Längserstreckung a.

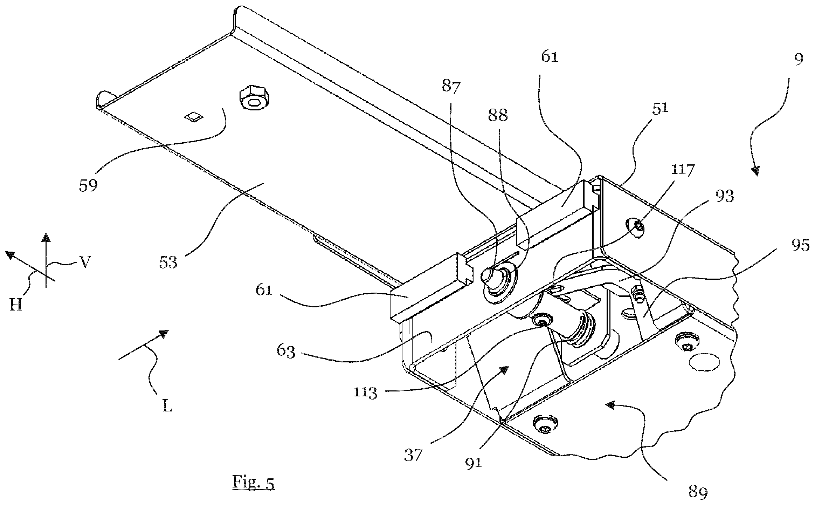

Unterhalb der Führungsnut 39 an der in Horizontalrichtung H weisenden Führungsschieneninnenfläche 65 sind drei Rastöffnungen 85 vorgesehen. Die Rastöffnungen 85 sind in Fahrzeuglängsrichtung L im Wesentlichen gleichmäßig verteilt an der Führungsschiene 11 angeordnet. Die Rastöffnungen 85 definieren jeweils eine Position des Sitzes 3 bzw. der Sitzbank 5 in Fahrzeuglängsrichtung L. Die Rastöffnungen 85 dienen dazu, mit einem diesen zugeordnetem Rastvorsprung 87 (Figur 5) der Feststell- und Freigabeeinrichtung 37 in Eingriff zu gelangen, um den Schlitten 9 in Fahrzeuglängsrichtung L an der Führungsschiene 11 zu fixieren. Dabei nimmt die Feststell- und Freigabeeinrichtung 37 den Sperrzustand ein.

In Figur 5 ist ein Ausschnitt des Schlittens 9 in einer Unteransicht abgebildet, aus welcher die Feststell- und Freigabeeinrichtung 37 und insbesondere dessen Rastmechanismus ersichtlich sind. Aus Figur 5 geht auch ein weiterer Vorteil der vorliegenden erfindungsgemäßen Verstelleinrichtung 1 hervor, wonach ein besonders kompakter Aufbau der Verstelleinrichtung 1 realisiert ist. Sämtliche Funktionskomponenten der Verstelleinrichtung 1 sind im Wesentlichen im Bereich des Schlittens 9 und insbesondere unterhalb einer Schlittenoberseite 9 in Bezug auf die Vertikalrichtung V angeordnet. Des Weiteren ist in der beispielhaften Ausführung gemäß Figur 5 zu erkennen, dass auch mehrere, vorzugsweise genau zwei, Kufen 61, die beispielsweise gleich geformt sind, hintereinander in Bezug auf die Fahrzeuglängsrichtung L an dem Schlitten 9 angebracht. Um die geradlinige, geführte Verlagerung des Schlittens 9 bezüglich der Führungsschiene 11 zu realisieren, ist eine Ausrichtung bzw. Orientierung im Raum der Kufen 61 im Wesentlichen identisch. Die dem in Figur 5 nicht dargestellten Wannenrand 15 zugewandte Schlittenaußenfläche 63 weist eine Durchgangsöffnung 88 auf, durch die der Rastvorsprung 87 hindurch ragt, um mit den Führungsschienenrastöffnungen 85 in Eingriff gelangen zu können. Ein vertikaler Abstand zwischen Kufe 61 und Rastvorsprung 87 ist dabei auf einen vertikalen Abstand zwischen Führungsnut 39 und Rastöffnung 85 abgestimmt. In Folge der mehreren Rastöffnungen 85, die jeweils einen Rasteingriff mit dem Rastvorsprung 87 der schlittenseitigen Feststell- und Freigabeeinrichtung 37 realisieren können, ist ein schrittweises Verlagern des Sitzes 3 in Fahrzeuglängsrichtung L entlang der Führungsschiene 11 möglich, wobei die Positionen des Sitzes 3 in Fahrzeuglängsrichtung L durch die Rastöffnungen 85, welche in diskreten Abständen zueinander angeordnet sind, festgelegt sind. Eine Schlittenunterseite ist im Allgemeinen mit der Bezugsziffer 89 gekennzeichnet. Der Rastvorsprung 87 ist in Figur 5 in der ausgefahrenen Stellung dargestellt, in welcher er bei entsprechender Positionierung in Bezug auf die Führungsschiene 11 in einem Rasteingriff mit der Führungsschienenrastöffnung 85 stehen würde. In Figur 5 ist zu erkennen, dass der Rastvorsprung 87 in die ausgefahrene Stellung vorgespannt ist. Dazu ist eine Feder 91, wie eine Spiralfeder, derart an dem Rastvorsprung 87 angebracht, dass die Feder 91 den Rastvorsprung 87 in die ausgefahrene Stellung drückt, bzw. eine Bewegung des Rastvorsprungs 87 in die ausgefahrene Stellung veranlasst. Der Rastvorsprung 87 ist demnach in der zur Fahrzeuglängsrichtung L lotrecht orientierten Horizontalrichtung H translatorisch beweglich gelagert zwischen der in Figur 5 und 6 dargestellten ausgefahrenen Position und der in Figur 7 dargestellten eingefahrenen Position. Anders ausgedrückt, ist zum Verbringen des Rastvorsprungs 87 in die eingefahrene Position die Vorspannung des Rastvorsprungs 87 und/oder die sich aufbauende Deformationsrückstellkraft der Feder 91 zu überwinden. Ein Getriebe 93 ist kraftübertragungsgemäß mit dem Zugarm 35 gekoppelt, sodass bei Betätigung der Feststell- und Freigabeeinrichtung 37, insbesondere des Zugarms 35, der Rastvorsprung 87 entgegen der Vorspannung bewegt wird, um den Rastvorsprung 87 aus dem Rasteingriff mit der Führungsschienenrastöffnung 85 freizugeben, das heißt um die Deformationsrückstellkraft der Feder 91 zu überwinden. In Figur 5 ist ein Hebelarm 95 des Getriebes 93 teilweise dargestellt, der dazu dient, die mittels des Zugarms 35 aufgebrachte Betätigungskraft eines Benutzers in eine Verlagerung des Rastvorsprungs 87 entgegen der Federvorspannung zu übertragen.

In Bezug auf die Figuren 5 und 6 werden die beiden End-Betriebszustände der Feststell- und Freigabeeinrichtung 37 näher erläutert, nämlich der Sperrzustand (Figur 6) und der Freigabezustand (Figur 7). Zu diesem Zweck ist in den Figuren 6 und 7 eine Unteransicht auf die Unterseite 89 des Schlittens 9 abgebildet, sodass die Feststell- und Freigabeeinrichtung 37 ersichtlich ist. Das beispielsweise als Kniehebel ausgeführte Getriebe 93 ist im Wesentlichen symmetrisch aufgebaut und umfasst zwei mittels einer Kulissenführung 97 miteinander gekoppelte Hebelarme 95, die jeweils kraftübertragungsgemäß mit einem an den gegenüberliegenden Schlittenaußenseiten 63 vorgesehenen Rastvorsprüngen 87 kraftübertragungsgemäß gekoppelt sind, um eine Betätigung des Zugarms 85 derart zu übertragen, dass die Rastvorsprünge 87 zwischen dem eingefahrenen Zustand und dem ausgefahrenen Zustand in der zur Fahrzeuglängsrichtung L lotrecht orientierten Horizontalrichtung H bewegbar sind. Der Zugarm 35 erstreckt sich in Fahrzeuglängsrichtung L unterhalb des Schlittens 9 im Wesentlichen entlang dessen vollständiger Längserstreckung und ist mittels eines Befestigungsstifts 99, der fest mit dem Zugarm 35 verbunden ist, an die Hebelarme 95 gekoppelt. Diese besitzen an sich überlappenden Endabschnitten 101, 103 jeweils eine entlang der Erstreckungsrichtung des Hebelarms 95 sich ausbildende Führungsnut 105, 107, in welcher der Befestigungsstift 99 bei einer Betätigung der Zugarms 35 geführt wird. Der Zugarm 35 ist in Fahrzeuglängsrichtung L geradlinig bewegbar, jedoch an der Schlittenunterseite 89 mittels zwei Befestigungseinrichtungen 109, wobei auch eine Befestigungseinrichtung ausreichend wäre, so angebracht, dass beim Verlagern des Zugarms 35 in Fahrzeuglängsrichtung L eine sich in Fahrzeuglängsrichtung L erstreckende Führungsnut 111 des Zugarms 35 derart mit der Befestigungseinrichtung 109 zusammenwirkt, dass eine Verlagerung in Fahrzeuglängsrichtung L des Zugarms 35 möglich ist, jedoch in einer Richtung quer zu Fahrzeuglängsrichtung L unterbunden ist. Im Bereich des Rastvorsprungs 87 sind die Hebelarme 95 ebenfalls mittels eines Befestigungsstifts 113, der an dem jeweiligen Rastvorsprung 87 vorgesehen ist, und einer in dem jeweiligen Hebelarm 95 vorgesehenen Führungsnut 115, 117 kulissenartig geführt. Die Kopplung der Hebelarme 95 mit den Rastvorsprüngen 87 über die Befestigungsstifte 113 ist derart realisiert, dass bei einer Betätigung des Zugarms 35, das heißt bei einem Ziehen an dem Zugarm 35 in Richtung des Fahrzeughecks (Figur 7; nach oben) der jeweilige Hebelarm 95 den Rastvorsprung 87 mittels des Befestigungsstifts 113 entgegen der Federkraft 91 in die eingefahrene Stellung (Figur 7) gedrückt wird. Das Getriebe 93 überträgt demnach eine Betätigung des Zugarms 35 in Fahrzeuglängsrichtung L in eine Verlagerungsrichtung des Rastvorsprungs 87 in der zur Fahrzeuglängsrichtung L senkrecht orientierten Horizontalrichtung H. Eine Betätigung des Zugarms 35 veranlasst eine Rotation der Hebelarme 95 um eine Befestigungseinrichtung 119, 121 welch den jeweiligen Hebelarm 95 rotierbar an der Schlittenunterseite 89 fixiert. Wie in Figur 7 zu erkennen ist, wird der die Hebelarme 95 koppelnde Befestigungsstift 99 bei Betätigung des Zugarms 35 in Fahrzeuglängsrichtung L in Richtung des Fahrzeughecks verlagert, wodurch die Hebelarme 95 zum einen eine Rotation um den Befestigungsstift 99 durchführen und zum anderen eine translatorische Relativbewegung bezüglich des Befestigungsstifts 99 ausführen, wobei eine Betätigungsamplitude des Zugarms 35 auch durch eine Abmessung der Führungsnuten 107, 105 in den Hebelarmen 95 limitiert ist. Die Betätigungsrichtung zum Feststellen und/oder Freigeben der Feststell- und Freigabeeinrichtung 37, also das gemäß der Figuren 6 und 7 beispielhaft dargestellte Ziehen an dem rückseitigen, an der Schlittenrückseite 57 angebrachten Zugarms 35 in Richtung des Fahrzeughecks in Fahrzeuglängsrichtung L, ist koaxial zur Verlagerungsrichtung des Schlittens 9 orientiert. Dadurch ist die besonders ergonomische, einfach zu betätigende und konstruktiv einfache Ausgestaltung der erfindungsgemäßen Verstelleinrichtung 1 möglich. Des Weiteren ist zu erkennen, dass das Feststellen und Freigeben der Feststell- und Freigabeeinrichtung 37 kinematisch von dem Verlagern des Schlittens 9 relativ zu der Führungsschiene 11 in Fahrzeuglängsrichtung L entkoppelt ist. Die Feststell- und Freigabeeinrichtung 37 ist auch strukturell von der Führungsschiene 11 getrennt ausgebildet. Bei einer Betätigung der Feststell- und Freigabeeinrichtung 37, um einen Rasteingriff zwischen dem Rastvorsprung 87 und den Führungsschienenrastöffnungen 85 zu bewirken, geht nicht automatisch eine Verlagerung des Sitzes 3 in Fahrzeuglängsrichtung einher. Dazu ist eine weitere Betätigung des Sitzes 3, unabhängig von der Betätigung der Feststell- und Freigabeeinrichtung 37, nötig, nämlich in Fahrzeuglängsrichtung L, um den Laderaum zu vergrößern und/oder zu verkleinern.

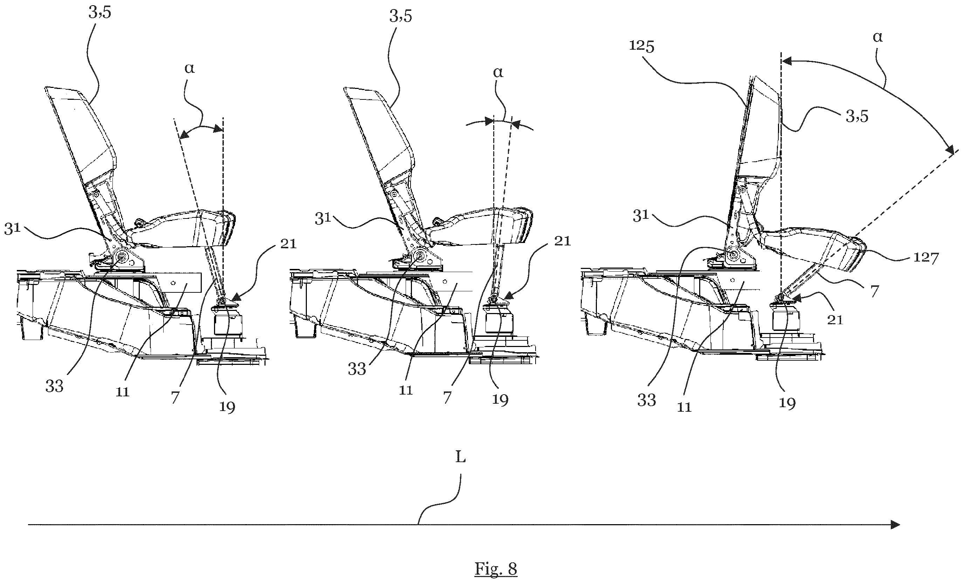

In Bezug auf Figur 8 sind Seitenansichten auf einen Sitz 3 bzw. auf eine Sitzbank 5 schematisch dargestellt, um verschiedene Sitzpositionen entlang der Fahrzeuglängsrichtung L anzudeuten. Dabei stellen die drei Sitzpositionen jeweils den Sperrzustand der Feststell- und Freigabeeinrichtung 37 dar, in dem ein Rasteingriff zwischen der Führungsschienenöffnung 85 und dem Rastvorsprung 87 gebildet ist. In der in Figur 8 links dargestellten Sitzposition befindet sich der Sitz 3 in der fahrzeugheckseitigsten Position, also in einer in Bezug auf die Fahrzeuglängsrichtung L hintersten Position, in der zwar der zur Verfügung stehende Laderaum am geringsten ist, aber am meisten Platz für den auf dem Sitz 3 sitzenden Fahrgast besteht. In dieser Ausgangsstellung ist die schwenkbeweglich an dem Fahrgastraumboden 19 gelagerte Stütze 7 nach hinten um einen Winkel α bezüglich einer gedachten Vertikalen, die mittels einer Strichlinie angedeutet ist, verkippt. In den beiden weiteren in Figur 8 dargestellten Sitzpositionen, die beliebig ausgewählt wurden, wurde der Sitz 3, bzw. der Schlitten 9 (nicht dargestellt in Figur 8), in Fahrzeuglängsrichtung L bezüglich der teilweise dargestellten Führungsschiene 11 geradlinig verlagert. Dies ist zum einen an der Position der hinteren Sitzstütze 31 in Bezug auf die Führungsschiene 11 zu sehen, und zum anderen an dem veränderten Winkel α zwischen Stütze 7 und der gedachten Vertikallinie, welche jeweils durch gestrichelte Linien angedeutet ist. Beispielsweise kann, wie es in Figur 8, rechtes Bild, dargestellt ist, eine vorderste, also fahrzeugfrontseitigste Position des Sitzes 3 derart realisiert sein, dass eine Sitzlehne 125 und/oder eine Sitzfläche 127 bezüglich einer gedachten und gestrichelt dargestellten Vertikallinie ebenfalls verkippt orientiert sind. Dabei stellt diese Position den maximal zur Verfügung stehenden Laderaum im Heckbereich des Kraftfahrzeugs dar.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, soweit der Gegenstand dem Schutzbereich der Ansprüche entspricht.

### Bezugszeichenliste

- 1: Verstelleinrichtung
- 3: Sitz
- 5: Sitzbank
- 7: Stütze
- 9: Schlitten
- 11: Führungsschiene
- 13: Laderaumboden
- 15: Wannenrand
- 17: Wannengrund
- 19: Fahrgastraumboden
- 21: schwenkbewegliche Lagerung / Schwenklager
- 23: Befestigungsprofil
- 25: Schenkel
- 27: Öffnung
- 29: Befestigungsstift
- 31: Tragstütze
- 33: Schwenklager
- 35: Zugarm
- 37: Feststell- und Freigabeeinrichtung
- 39: Nut
- 41: Nut
- 43: Stirnseite
- 45: Stirnseite
- 47: Eingriffsöffnung
- 49: Eingriffsöffnung
- 51: Brückenabschnitt
- 53: Verlängerungsabschnitt
- 55: Schenkel
- 57: Schenkel
- 59: Befestigungsposition
- 61: Kufe
- 63: Seitenfläche
- 65: Innenfläche
- 67: Außenseite
- 69: Grund
- 71: Nutwand
- 73: Nutwand
- 75: Winkel
- 77: Schenkel
- 79: Lasche
- 81: Verschraubung
- 83: Öffnung
- 85: Rastöffnung
- 87: Rastvorsprung
- 88: Öffnung
- 89: Schlittenunterseite
- 91: Feder
- 93: Getriebe (93)
- 95: Hebelarm
- 97: Kulissenführung
- 99: Befestigungsstift
- 101: Endabschnitt
- 103: Endabschnitt
- 105: Führungsnut
- 107: Führungsnut
- 109: Befestigungseinrichtung
- 111: Führungsnut
- 113: Befestigungsstift
- 115: Führungsnut
- 117: Führungsnut
- 119: Befestigungseinrichtung
- 121: Befestigungseinrichtung

- L: Fahrzeuglängsrichtung
- H: Horizontalrichtung
- V: Vertikalrichtung
- a: Längserstreckung

## Patentansprüche

1. KFZ umfassend:
- einen Sitz, vorzugsweise eine Sitzbank, insbesondere Rücksitz oder Rücksitzbank;
- einen rückseitigen Laderaum mit einem wannenartigen Laderaumboden (13), dessen seitliche Wannenränder (15) in einen gemeinsamen Wannengrund (17) münden, auf dem ein Rollstuhl in dem Laderaum verstaubar ist; und
- eine Verstelleinrichtung (1) zum Verlagern des Sitzes (3) oder der Sitzbank (5) in Fahrzeuglängsrichtung (L), um den Laderaum zu vergrößern oder zu verkleinern, wobei die Verstelleinrichtung (1)
- eine vordere an den Sitz (3) zu befestigende Stütze (7), die schwenkbeweglich an dem Laderaumboden (13) oder einem an den Laderaumboden (13) anschließenden Fahrgastraumboden (19) zu lagern ist;
- eine an einen Wannenrand (15) befestigte Führungsschiene (11); und
- einen hinteren, sitzseitigen Schlitten (9), auf dem der Sitz (3) oder die Sitzbank (5) befestigt ist und der derart mit der Führungsschiene (11) im Gleiteingriff steht, dass der Schlitten (9) überwiegend, vorzugsweise vollständig, geradlinig relativ zu der Führungsschiene (11) verlagerbar ist und die Stütze (7) beim Verlagern des Schlittens (9) relativ zu der Führungsschiene (11) um die schwenkbewegliche Lagerung schwenkt,
wobei sich der Schlitten (9) im Wesentlichen über die gesamte Sitzbreite, insbesondere Sitzbankbreite, und brückenartig über den Laderaumboden, insbesondere Wannengrund, erstreckt.

2. KFZ nach Anspruch 1, wobei der Gleiteingriff mittels einer Linearführung, insbesondere Schienenführung, realisiert ist und/oder eine Verlagerungsrichtung im Wesentlichen horizontal orientiert ist.

3. KFZ nach einem der vorstehenden Ansprüche, wobei die Führungsschiene (11) eine sich linear in Fahrzeuglängsrichtung (L) erstreckende Nut (39) aufweist und der Schlitten (9) wenigstens eine der Nut (39) zugeordnete Kufe (61) aufweist, oder umgekehrt, wobei die Kufe (61) in der Nut (39) in Fahrzeuglängsrichtung (L) translatorisch verlagerbar ist.

4. KFZ nach Anspruch 3, wobei die Nut (39) an wenigstens einem Ende in Fahrzeuglängsrichtung (L) offen gestaltet ist, vorzugsweise derart, dass der Schlitten (9) an dem wenigstens einen Ende in Fahrzeuglängsrichtung (L) an der Führungsschiene (11) angebracht werden kann, vorzugsweise die wenigstens eine Kufe (61) in die Nut (39) eingeschoben werden kann.

5. KFZ nach Anspruch 3 oder 4, wobei die wenigstens eine Kufe (61) und die Nut (39) aufeinander formabgestimmt sind, insbesondere komplementär zueinander geformt sind, wobei insbesondere die wenigstens eine Kufe (61) und die Nut (39) derart aufeinander formabgestimmt sind, dass ein Verlagern der Kufe (61) quer zur Fahrzeuglängsrichtung (L) unterbunden ist.

6. KFZ nach einem der Ansprüche 2 bis 5, wobei die Linearführung als Schwalbenschwanzführung realisiert ist, wobei insbesondere die Nut (39) einen im Wesentlichen T-förmigen Querschnitt besitzt und/oder die wenigstens eine Kufe (61) einen im Wesentlichen T-förmigen Querschnitt besitzt.

7. KFZ nach einem der vorstehenden Ansprüche, , wobei zwei vorzugsweise formgleiche Führungsschienen (11) parallel zueinander orientiert und auf gleicher Höhe bezüglich der Fahrzeuglängsrichtung (L) angeordnet sind, wobei insbesondere die beiden Führungsschienen (11) an sich gegenüberliegenden Wannenrändern zu befestigen sind und/oder wenigstens eine Kufe (61) je einer Führungsschiene (11) zugeordnet ist.

8. KFZ nach einem der vorstehenden Ansprüche, wobei die Führungsschiene (11) derart an dem Wannenrand, vorzugsweise an einer in Richtung des gegenüberliegenden Wannenrands orientierten Wannenseite, zu befestigen ist, dass die Nut (39) dem gegenüberliegenden Wannenrand, vorzugsweise der gegenüberliegenden Wannenseite, insbesondere der Nut (39) der gegenüberliegenden weiteren Führungsschiene (11), zugewandt ist und/oder dass eine die Nut (39) begrenzende, sich von einer Nutaußenseite (67) hin zu einem Nutgrund (69) erstreckende Nutwand (71 ,73) den Schlitten, insbesondere die wenigstens eine Kufe (61), trägt.

9. KFZ nach einem der vorstehenden Ansprüche, wobei der Schlitten (9) in Fahrzeuglängsrichtung (L) um mehr als 100 mm, insbesondere um mehr als 110 mm, 120 mm, 130 mm, 140 mm, 150 mm, 160 mm, 170 mm, 180 mm, 190 mm, 200 mm oder um mehr als 200 mm, relativ zu der Führungsschiene (11) verlagerbar ist, wobei insbesondere eine Nutlänge in Fahrzeuglängsrichtung (L) mehr als 100 mm, insbesondere mehr als 110 mm, 120 mm, 130 mm, 140 mm, 150 mm, 160 mm, 170 mm, 180 mm, 190 mm, 200 mm oder mehr als 200 mm, beträgt.

10. KFZ umfassend:
- einen Sitz, vorzugsweise eine Sitzbank, insbesondere Rücksitz oder Rücksitzbank;
- einen rückseitigen Laderaum mit einem wannenartigen Laderaumboden (13), dessen seitliche Wannenränder (15) in einen gemeinsamen Wannengrund (17) münden, auf dem ein Rollstuhl in dem Laderaum verstaubar ist; und
- eine Verstelleinrichtung (1) zum Verlagern des Sitzes oder der Sitzbank (5) des KFZ in Fahrzeuglängsrichtung (L), um einen rückseitigen Laderaum zu vergrößern oder zu verkleinern, umfassend:
- eine vordere an den Sitz (3) zu befestigende Stütze (7), die schwenkbeweglich an dem Laderaumboden (13) oder einem an den Laderaumboden (13) anschließenden Fahrgastraumboden (19) zu lagern ist;
- eine an einen Wannenrand (15) befestigte Führungsschiene (11); und
- einen hinteren, sitzseitigen Schlitten (9), auf dem der Sitz (3) oder die Sitzbank (5) befestigt ist und der relativ zu der Führungsschiene (11) verlagerbar ist; und
- eine insbesondere manuell zu betätigende Feststell- und Freigabeeinrichtung (37), welche zwischen einem Sperrzustand, in dem der Schlitten (9) entgegen einer Verlagerung an der Führungsschiene (11) befestigt ist, und einem Freigabezustand verbringbar ist, in dem der Schlitten (9) relativ zur Führungsschiene (11) verlagerbar ist, wobei eine Betätigungsrichtung zum Feststellen und/oder Freigeben der Feststell- und Freigabeeinrichtung (37) parallel, vorzugsweise koaxial, zu einer Verlagerungsrichtung des Schlittens (9) orientiert ist,
wobei die Feststell- und Freigabeeinrichtung (37) im Wesentlichen vollständig an einer dem Laderaumboden (13) zugewandten Schlittenunterseite (89) befestigt ist, und
wobei die Feststell- und Freigabeeinrichtung (37) einen Zugarm (35) zum Betätigen der Feststell- und Freigabeeinrichtung (37) aufweist, der rückseitig des Sitzes angeordnet ist.

11. KFZ nach Anspruch 10, wobei das Feststellen und Freigeben der Feststell- und Freigabeeinrichtung (37) kinematisch von dem Verlagern des Schlittens (9) relativ zu der Führungsschiene (11) entkoppelt ist und/oder die Feststell- und Freigabeeinrichtung (37) strukturell von der Führungsschiene (11) getrennt ist.

12. KFZ nach Anspruch 10 oder 11, wobei die Führungsschiene (11) wenigstens zwei Rastelemente, wie eine Rastvertiefung, vorzugsweise Rastöffnung (85), oder einen Rastvorsprung, aufweist und die Feststell- und Freigabeeinrichtung (37) wenigstens ein den Führungsschienenrastelementen zugeordnetes Rastelement, wie einen Rastvorsprung (87) oder eine Rastvertiefung, vorzugsweise Rastöffnung, besitzt, um den Sitz (3), vorzugsweise den Schlitten (9), an wenigstens zwei, vorzugsweise wenigstens drei, Positionen in Fahrzeuglängsrichtung (L) zu fixieren.

13. KFZ nach einem der Ansprüche 10 bis 12, wobei der Zugarm (35) zum Betätigen der Feststell- und Freigabeeinrichtung (37) insbesondere mittig bezüglich der Fahrzeugbreite angeordnet ist, wobei insbesondere beim Betätigen des Zugarms (35) die Feststell- und Freigabeeinrichtung aus dem Sperrzustand in den Freigabezustand verbringbar ist, vorzugsweise in dem das Rastelement der Feststell- und Freigabeeinrichtung (37) aus einem Eingriff mit dem Führungsschienenrastelement gebracht ist.

14. KFZ nach einem der Ansprüche 10 bis 13, wobei die Feststell- und Freigabeeinrichtung (37) im Wesentlichen vollständig, insbesondere bis auf wenigstens einen Teil des Zugarms, unterhalb des Schlittens (9) angeordnet ist.

15. KFZ nach einem der Ansprüche 10 bis 14, wobei das Rastelement der Feststell- und Freigabeeinrichtung (37) derart vorgespannt, vorzugsweise federvorgespannt, ist, dass das Rastelement in einen Eingriff mit dem Führungsschienenrastelement gedrückt ist, um den Sitz (3) in Fahrzeuglängsrichtung (L) an der Position zu fixieren, und/oder zum Freigeben der Feststell- und Freigabeeinrichtung (37) die Vorspannung des Rastelements zu überwinden ist.

16. KFZ nach einem der Ansprüche 10 bis 15, wobei die Feststell- und Freigabeeinrichtung (37) ein mit dessen Rastelement gekoppeltes Getriebe (93), wie einen Kniehebel, aufweist, wobei insbesondere das Getriebe (93) bei Betätigung der Feststell- und Freigabeeinrichtung (37), insbesondere des Zugarms, dessen Rastelement entgegen der Vorspannung bewegt, insbesondere um das Rastelement aus dem Eingriff mit dem Führungsschienenrastelement freizugeben.

17. KFZ nach Anspruch 16, wobei das Getriebe (93) zwei mit jeweils einem Rastelement gekoppelte Hebelarme (95) aufweist, die vorzugsweise mittels einer Kulissenführung aneinander gekoppelt sind.

18. KFZ nach einem der Ansprüche 10 bis 17, wobei eine Bewegungsrichtung des Rastelements der Feststell- und Freigabeeinrichtung (37) zum Freigeben und Feststellen quer, vorzugsweise lotrecht, bezüglich der Fahrzeuglängsrichtung (L) und/oder der Verlagerungsrichtung des Schlittens (9) orientiert ist.

## Claims

1. Motor vehicle, comprising:
- a seat, preferably a bench seat, in particular a back seat or back seat bench;
- a rear side load compartment with a trough-like load compartment bottom (13), the lateral trough edges (15) of which lead into a common trough bottom (17) on which a wheelchair in the load compartment is stowable; and
- an adjusting device (1) for displacing the seat (3) or the bench seat (5) in a longitudinal direction (L) of the vehicle, in order to increase or decrease the load compartment, wherein the adjusting device (1) comprises
- a front support (7) to be attached to the seat (3), which is to be pivotably mounted on the load compartment bottom (13) or on a passenger compartment bottom (19) adjoining the load compartment bottom (13);
- a guide rail (11) attached to a trough edge (15);
- a rear, seat sided carriage (9) on which the seat (3) or the seat bench (5) is attached and which is in sliding engagement with the guide rail (11) in such way that the carriage (9) is predominantly, in particular completely, straightly displaceable relative to the guide rail (11), and the support (7) pivots about the pivotable bearing upon displacement of the carriage (9) relative to the guide rail (11),
wherein the carriage (9) extends substantially over the entire seat width, in particular seat bench width, and the over the load compartment bottom, in particular trough bottom, in a bridge like manner.

2. Motor vehicle, according to claim 1, wherein the sliding engagement is realized by means of a linear guide, in particular a rail guide, and/or a displacement direction is oriented substantially horizontally.

3. Motor vehicle according to one of the preceding claims, wherein the guide rail (11) has a groove (39) extending linearly in the longitudinal direction (L) of the vehicle, and the carriage (9) has at least one skid (61) assigned to the groove (39), or vice versa, wherein the skid (61) is translationally displaceable in the groove (39) in longitudinal direction (L) of the vehicle.

4. Motor vehicle according to claim 3, wherein the groove (39) is adapted to be open on at least one end in longitudinal direction (L) of the vehicle, preferably in such way that the carriage (9) is attachable to the guide rail (11) in longitudinal direction (L) of the vehicle at the least one end, preferably the at least one skid (61) can be inserted in the groove (39).

5. Motor vehicle according to claim 3 or 4, wherein the at least one skid (61) and the groove (39) are shape-matched to one another, in particular shaped complementary to one another, wherein in particular the at least one skid (61) and the nut (39) are shape-matched to one another in such way that displacement of the skid (61) transversely to the longitudinal direction (L) of the vehicle is prevented.

6. Motor vehicle according to one of the claims 2 to 5, wherein the linear guide is realized as a dovetail guide, wherein in particular the groove (39) has a substantially T-shaped cross section and/or the at least one skid (61) has a substantially T-shaped cross section.

7. Motor vehicle according to one of the preceding claims, wherein two guide rails (11), preferably identical in shape, are oriented parallel to one another and are arranged at a same height with respect to the longitudinal direction (L) of the vehicle, wherein in particular the two guide rails (11) are to be attached to opposing trough edges and/or at least one skid (61) is assigned to a respective guide rail (11).

8. Motor vehicle according to one of the preceding claims, wherein the guide rail (11) is to be attached to the trough edge, preferably to a trough side oriented in direction of the opposing trough edge, in such way that the groove (39) faces the opposing trough edge, preferably the opposing trough side, in particular the groove (39) of the opposing further guide rail (11) and/or that a groove wall (71, 73), which delimits the groove (3) and extends from a groove outer side (67) to a groove bottom (69), supports the carriage, in particular the at least one skid (61).

9. Motor vehicle according to one of the preceding claims, wherein the carriage (9) is displaceable in the longitudinal direction (L) of the vehicle by more than 100 mm, in particular by more than 110 mm, 120 mm, 130 mm, 140 mm, 150 mm, 160 mm, 170 mm, 180 mm, 190 mm, 200 mm or by more than 200 mm relative to the guide rail (11), wherein in particular a groove length in the longitudinal direction (L) of the vehicle is more than 100 mm, in particular more than 110 mm, 120 mm, 130 mm, 140 mm, 150 mm, 160 mm, 170 mm, 180 mm, 190 mm or more than 200 mm.

10. Motor vehicle, comprising:
- a seat, preferably a bench seat, in particular a back seat or back seat bench;
- a rear side load compartment with a trough-like load compartment bottom (13), the lateral trough edges (15) of which lead into a common trough bottom (17) on which a wheelchair in the load compartment is stowable; and
- an adjusting device (1) for displacing the seat (3) or the bench seat (5) of the motor vehicle in a longitudinal direction (L) of the vehicle, in order to increase or decrease the load compartment, comprising:
- a front support (7) to be attached to the seat (3), which is to be pivotably mounted on the load compartment bottom (13) or on a passenger compartment bottom (19) adjoining the load compartment bottom (13);
- a guide rail (11) attached to a trough edge (15);
- a rear, seat sided carriage (9) on which the seat (3) or the seat bench (5) is attached and which is displaceable relative to the guide rail (11); and
- a locking and releasing device (37), in particular to be actuated manually, which can be brought between a locking state, in which the carriage (9) is attached to the guide rail (11) against displacement, and a releasing state, in which the carriage (9) is displaceable relative to the guide rail (11), wherein an actuating direction for locking and/or releasing of the locking and releasing device (37) is oriented parallel, preferably coaxially, to a displacement direction of the carriage (9),
wherein the locking and releasing device (37) is substantially completely attached to a carriage underside (89) facing the load compartment bottom (13); and
wherein the locking and releasing device (37) has a pull arm (35) for actuating the locking and releasing device (37), which is arranged at the rear side of the seat.

11. Motor vehicle according to claim 10, wherein locking and releasing of the locking and releasing device (37) is kinematically decoupled from the displacement of the carriage (9) relative to the guide rail (11) and/or the locking and releasing device (37) is structurally separated from the guide rail (11).

12. Motor vehicle according to claim 10 or 11, wherein the guide rail (11) has at least two detent elements, like a detent recess, preferably a detent opening (85), or a detent projection, and the locking and releasing device (37) has at least one detent element assigned to the guide rail detent elements, such as a detent projection (87) or a detent recess, preferably detent opening, in order to fix the seat (3), preferably the carriage (9), in at least two, preferably at least three, positions in the longitudinal direction (L) of the vehicle.

13. Motor vehicle according to one of the claims 10 to 12, wherein the pull arm (35) for actuating the locking and releasing device (37) is arranged, in particular centrally, with respect to the vehicle width, wherein the locking and releasing device (37) can be brought out of the locking state into the releasing state, in particular upon actuating the pull arm (35), preferably by the detent element of the locking and releasing device (37) being brought out of engagement with the guide rail detent element.

14. Motor vehicle according to one of the claims 10 to 13, wherein the locking and releasing device (37) is arranged substantially completely below the carriage (9), in particular except for at least one part of the pull arm.

15. Motor vehicle according to one of the claims 10 to 14, wherein the detent element of the locking and releasing device (37) is biased, in particular spring biased, in such way that the detent element is pressed into an engagement with the guide rail detent element, in order to fix the seat (3) in the longitudinal direction (L) of the vehicle in position, and/or the bias of the detent element has to be overcome in order to release the locking and releasing device (37).

16. Motor vehicle according to one of the claims 10 to 15, wherein the locking and releasing device (37) has a gear (93), such as a toggle lever, coupled to its detent element, wherein in particular the gear (93), upon actuating the locking and releasing device (37), in particular the pull arm, moves its detent element against the bias, in particular in order to release the detent element from engagement with the guide rail detent element.

17. Motor vehicle according to claim 16, wherein the gear (93) has two lever arms (95) coupled to a respective detent element, which are coupled to one another, preferably by means of a slide guide.

18. Motor vehicle according to one of the claims 10 to 17, wherein a movement direction of the detent element of the locking and releasing device (37) is oriented transversely, preferably perpendicular, with respect to the longitudinal direction (L) of the vehicle and/or the displacement direction of the carriage (9) for releasing and locking.

## Revendications

1. Véhicule automobile comprenant :
- un siège, de préférence une banquette, notamment un siège arrière ou une banquette arrière ;
- un espace de chargement arrière avec un plancher d'espace de chargement en forme de bac (13), dont les bords latéraux (15) débouchent dans un fond de bac commun (17), sur lequel un fauteuil roulant peut être rangé dans l'espace de chargement ; et
- un dispositif de réglage (1) pour déplacer le siège (3) ou la banquette (5) dans la direction longitudinale du véhicule (L) afin d'augmenter ou de diminuer l'espace de chargement, dans lequel le dispositif de réglage (1)
- un support (7) à fixer à l'avant sur le siège (3), qui est à ranger de manière pivotante sur le plancher d'espace de chargement (13) ou un plancher d'habitacle (19) se rattachant au plancher d'espace de chargement (13);
- un rail de guidage (11) fixé à un rebord de bac (15) ; et
- un chariot arrière (9) côté siège, sur lequel le siège (3) ou la banquette (5) est fixé et qui est en prise coulissante avec le rail de guidage (11) de telle sorte que le chariot (9) principalement, de préférence complètement, puisse être déplacé en ligne droite par rapport au rail de guidage (11) et le support (7) pivote autour du palier pivotant lorsque le chariot (9) est déplacé par rapport au rail de guidage (11),
dans lequel le chariot (9) s'étend sensiblement sur toute la largeur du siège, notamment la largeur de la banquette, et à la manière d'un pont sur le plancher du coffre à bagages, notamment le plancher du bac.

2. Véhicule automobile selon la revendication 1, dans lequel la mise en prise coulissante est réalisée au moyen d'un guidage linéaire, notamment un rail de guidage, et/ou une direction de déplacement est orientée essentiellement horizontalement.

3. Véhicule automobile selon une des revendications précédentes, dans lequel le rail de guidage (11) comporte une rainure (39) s'étendant linéairement dans la direction longitudinale du véhicule (L) et le chariot (9) comporte au moins une glissière (61) affectée à la rainure (39), ou inversement, la glissière (61) est déplaçable en translation dans la rainure (39) dans la direction longitudinale (L) du véhicule.

4. Véhicule automobile selon la revendication 3, dans lequel la rainure (39) à au moins une extrémité dans la direction longitudinale du véhicule (L) est conçue ouverte, de préférence de telle sorte que le chariot (9) puisse être fixé au rail de guidage (11) à au moins une extrémité dans la direction longitudinale (L) du véhicule, de préférence au moins un patin (61) peut être poussé dans la rainure (39).

5. Véhicule automobile selon la revendication 3 ou 4, dans lequel la au moins une glissière (61) et la rainure (39) sont de forme adaptée l'une à l'autre, notamment sont de forme complémentaire l'une de l'autre, dans lequel la au moins une glissière (61) et la rainure (39) en particulier sont mutuellement compatibles de forme adaptée de sorte qu'un déplacement du patin (61) transversalement à la direction longitudinale du véhicule (L) soit empêché.

6. Véhicule automobile selon une des revendications 2 à 5, dans lequel le guidage linéaire est réalisé sous la forme d'un guidage en queue d'aronde, dans lequel notamment la rainure (39) a une section transversale sensiblement en forme de T et/ou la au moins une glissière (61) a une section transversale sensiblement en forme de T.

7. Véhicule automobile selon une des revendications précédentes, dans lequel deux rails de guidage (11) de préférence de forme identique sont orientés parallèlement l'un à l'autre et sont disposés à la même hauteur par rapport à la direction longitudinale (L) du véhicule, dans lequel en particulier les deux rails de guidage (11) doivent être fixés sur des bords de bac opposés et/ou au moins un patin (61) est associé à chaque rail de guidage (11).

8. Véhicule automobile selon une des revendications précédentes, dans lequel le rail de guidage (11) est destiné à être fixé au bord du bac, de préférence sur un côté du bac orienté en direction du bord du bac opposé, que la rainure (39) fait face au bord opposé du bac, de préférence le côté opposé du bac, en particulier la rainure (39) fait face à l'autre rail de guidage opposé (11) et/ou qu'une paroi de rainure (71, 73) délimitant la rainure (39) et s'étendant à partir d'une rainure extérieure (67) vers un fond de rainure (69) porte le chariot, en particulier le au moins un patin (61).

9. Véhicule automobile selon une des revendications précédentes, dans lequel le chariot (9) est déplaçable dans la direction longitudinale du véhicule (L) de plus de 100 mm, notamment de plus de 110 mm, 120 mm, 130 mm, 140 mm, 150 mm, 160 mm, 170 mm , 180 mm, 190 mm, 200 mm ou plus de 200 mm, par rapport au rail de guidage (11), dans lequel en particulier une longueur de rainure dans la direction longitudinale du véhicule (L) s'élève à plus de 100 mm , notamment plus de 110 mm, 120 mm, 130 mm, 140 mm, 150 mm, 160 mm, 170 mm, 180 mm, 190 mm, 200 mm ou plus de 200 mm.

10. Véhicule automobile comprenant :
- un siège, de préférence une banquette, notamment un siège arrière ou une banquette arrière ;
- un espace de chargement arrière avec un plancher d'espace de chargement en forme debac (13) dont les bords latéraux (15) débouchent dans un fond de bac commun (17) sur lequel un fauteuil roulant peut être rangé dans l'espace de chargement ; et
- un dispositif de réglage (1) pour déplacer le siège ou la banquette (5) du véhicule automobile dans la direction longitudinale du véhicule (L) pour agrandir ou réduire un espace de chargement arrière, comprenant :
- un support (7) à fixer à l'avant sur le siège (3), qui est à ranger de manière pivotante sur le plancher d'espace de chargement (13) ou un plancher d'habitacle (19) se rattachant au plancher d'espace de chargement (13);
- un rail de guidage (11) fixé à un rebord de bac (15) ; et
- un chariot arrière côté siège (9) sur lequel est fixé le siège (3) ou la banquette (5) et qui est déplaçable par rapport au rail de guidage (11) ; et
- un dispositif de verrouillage et de déverrouillage (37) à actionner, notamment manuellement, qui peut être amené entre un état bloqué, dans lequel le chariot (9) est fixé au rail de guidage (11) contre le déplacement, et un état libéré, dans lequel le chariot (9) est déplaçable par rapport au rail de guidage (11), dans lequel une direction d'actionnement pour verrouiller et/ou déverrouiller le dispositif de verrouillage et de déverrouillage (37) est orientée parallèlement, de préférence coaxialement, à une direction de déplacement du chariot (9),
dans lequel le dispositif de verrouillage et de déverrouillage (37) est fixé essentiellement complètement à un dessous de chariot (89) faisant face au plancher de l'espace de chargement (13), et
dans lequel le dispositif de verrouillage et de déverrouillage (37) comprend un bras de traction (35) pour actionner le dispositif de verrouillage et de déverrouillage (37) qui est agencé à l'arrière du siège.

11. Véhicule automobile selon la revendication 10, dans lequel le verrouillage et le déverrouillage du dispositif de verrouillage et de déverrouillage (37) est découplé cinématiquement du déplacement du chariot (9) par rapport au rail de guidage (11) et/ou le verrouillage et le déverrouillage du dispositif (37) est séparé structurellement du rail de guidage (11).

12. Véhicule automobile selon la revendication 10 ou 11, dans lequel le rail de guidage (11) comporte au moins deux éléments d'encliquetage, tels qu'une cavité d'encliquetage, de préférence une ouverture d'encliquetage (85), ou une saillie d'encliquetage, et le dispositif de verrouillage et de déverrouillage (37) comporte au moins un élément d'encliquetage associé aux éléments d'encliquetage du rail de guidage, tel qu'une saillie d'encliquetage (87) ou une dépression d'encliquetage, de préférence une ouverture d'encliquetage, afin de fixer le siège (3), de préférence le chariot (9), dans au moins deux, de préférence au moins trois, positions dans la direction longitudinale (L) du véhicule.

13. Véhicule automobile selon une des revendications 10 à 12, dans lequel le bras de traction (35) pour actionner le dispositif de verrouillage et de déverrouillage (37) est disposé notamment au milieu par rapport à la largeur du véhicule, dans lequel le dispositif de verrouillage et de déverrouillage peut être amené de l'état bloqué à l'état déverrouillé en particulier lorsque le bras de traction (35) est actionné, de préférence dans lequel l'élément de verrouillage du dispositif de verrouillage et de déverrouillage (37) est amené hors prise de l'élément de verrouillage du rail de guidage.

14. Véhicule automobile selon une des revendications 10 à 13, dans lequel le dispositif de verrouillage et de déverrouillage (37) est disposé essentiellement complètement, notamment à l'exception d'au moins une partie du bras de traction, sous le chariot (9).

15. Véhicule automobile selon une des revendications 10 à 14, dans lequel l'élément de verrouillage du dispositif de verrouillage et de déverrouillage (37) est précontraint, de préférence sollicité par ressort, de telle manière que l'élément de verrouillage soit enfoncé en prise avec l'élément de verrouillage de rail de guidage , pour fixer en position le siège (3) dans la direction longitudinale du véhicule (L), et/ou pour libérer le dispositif de verrouillage et de déverrouillage (37), la précontrainte de l'élément de verrouillage doit être surmontée.

16. Véhicule automobile selon une des revendications 10 à 15, dans lequel le dispositif de verrouillage et de déverrouillage (37) comporte une transmission (93) couplée à son élément de verrouillage, tel qu'une genouillère, dans lequel l'engrenage (93) déplace notamment l'élément de verrouillage en sens opposé à la précontrainte lorsque le dispositif de verrouillage et de déverrouillage (37), notamment le bras de traction, est actionné, en particulier pour libérer l'élément de verrouillage de la mise en prise avec l'élément de verrouillage du rail de guidage.

17. Véhicule automobile selon la revendication 16, dans lequel la transmission (93) comporte deux bras de levier (95) respectivement couplés à un élément de verrouillage, qui sont de préférence couplés l'un à l'autre au moyen d'un guide de liaison.

18. Véhicule automobile selon une des revendications 10 à 17, dans lequel une direction de déplacement de l'élément de verrouillage du dispositif de verrouillage et de déverrouillage (37) pour déverrouiller et verrouiller est orienté transversalement, de préférence verticalement, par rapport à la direction longitudinale (L) du véhicule et/ou à la direction de déplacement du chariot (9).
